# EUROPEAN PATENT APPLICATION

(11) **EP 1 439 330 A2**
(43) Date of publication of application: **21.07.2004**
(21) Application number: 03030027.1
(22) Date of filing: 30.12.2003
(51) Int. Cl.: F16H 61/02

(54) **Control apparatus and control method for an automatic transmission for a diesel engine**

(30) Priority: 16.01.2003 JP 2003008729
(71) Applicant: TOYOTA JIDOSHA KABUSHIKI KAISHA, Aichi-ken 471-8571 (JP)
(72) Inventor: Negishi, Akiyoshi Toyota Jidosha K.K., Aichi-ken, 471-8571 (JP); Kibe, Kazuya Toyota Jidosha K.K., Aichi-ken, 471-8571 (JP); Matsushita, Tomohiko Toyota Jidosha K.K., Aichi-ken, 471-8571 (JP)
(74) Representative: KUHNEN & WACKER

(57) **Abstract**

A control apparatus for an automatic transmission for a diesel engine is applied to a vehicle (1) in which is mounted a diesel engine (11) in which fuel is injected based on a comparison between a required value (qireq) for a fuel injection quantity determined based on an operation amount (Accl) of an accelerator pedal (AC) and a maximum injection quantity (qilmt), and the maximum injection quantity (qilmt) is corrected based on a predetermined running parameter. A downshift is then performed in a transmission (12, 13) when the required value (Tereq) for output from the diesel engine (11) calculated from the operation amount (Accl) of the accelerator pedal (AC) is equal to, or greater than, an upper limit value (Telmt) for the output from the diesel engine (11) calculated based on the maximum injection quantity (qilmt). Accordingly, a gearshift is able to be realized that is appropriated for the running state of the vehicle.

## Description

### BACKGROUND OF THE INVENTION

### 1. Field of the Invention

The invention relates to a control apparatus and control method for an automatic transmission for a diesel engine, which is applied to a vehicle in which is mounted a diesel engine and which controls a gearshift in the automatic transmission of the vehicle.

### 2. Description of the Related Art

Automatic transmissions in which gearshifts are performed automatically are well known.

An automatic transmission for a vehicle in which is mounted a diesel engine (i.e., an automatic transmission for a diesel engine) typically shifts gears in the following manner using a control apparatus for an automatic transmission.

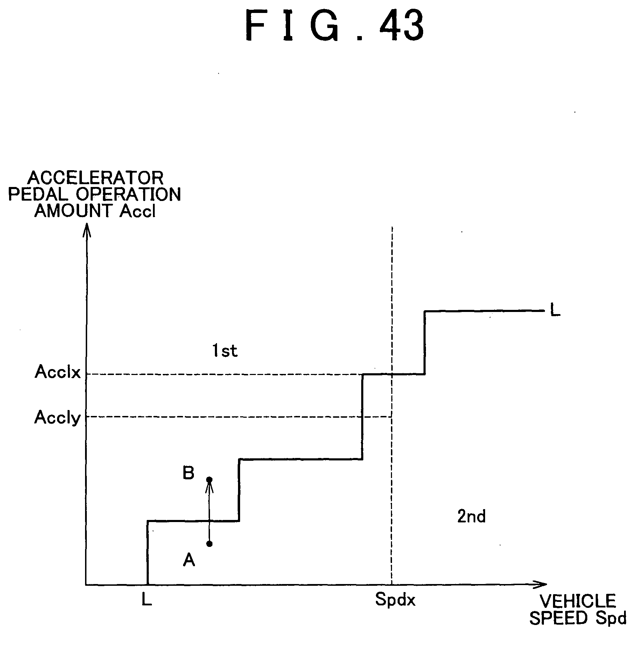

That is, an accelerator pedal operation amount Accl and a vehicle speed Spd are referenced on a shift map (FIG. 43) specifying a shift line L-L, for example, while a vehicle is running. A downshift from second gear to first gear occurs in the automatic transmission when the track determined by the parameters passes from the second gear side to the first gear side on the shift line L-L, i.e., when there is a shift from point A defined by the accelerator pedal operation amount Accl and the vehicle speed Spd to point B in FIG. 43.

When fuel is injected by an injector in the diesel engine, the quantity of that fuel injection is restricted so as not to exceed an upper limit value (i.e., a maximum injection quantity) for the fuel injection quantity set based on the engine speed. Further, this maximum injection quantity is corrected appropriately according to the atmospheric pressure, which affects the intake air quantity, and the like.

Therefore, the following concerns arise depending on the running state of the vehicle when a gearshift is performed in the automatic transmission using the related art control apparatus. Let us assume here a case in which the vehicle speed is vehicle speed Spdx shown in FIG. 43 when the vehicle is running at high altitude.

When the maximum injection quantity is corrected to be less than when the vehicle is running at low altitude, the fuel injection quantity starts to be restricted by the maximum injection quantity at the point where the accelerator pedal operation amount Accl reaches an operation amount Accly that is smaller than an operation amount Acclx with which a downshift is performed. Because a downshift is not performed after the accelerator pedal operation amount Accl exceeds the operation amount Accly until it reaches the operation amount Acclx despite the fact that the engine output is not expected to increase, a reduction in acceleration performance results.

JP(A) 8-238959, for example, discloses a control apparatus for an automatic transmission. The apparatus disclosed in this publication, however, was proposed for control during an upshift in which the transmission is shifted into a higher gear. No consideration is given to control during a downshift or to limiting the fuel injection quantity by the maximum injection quantity. Accordingly, it is conceivable that the same problem as described above may occur even when the apparatus in JP(A) 8-238959 is applied to an automatic transmission for a diesel engine.

### SUMMARY OF THE INVENTION

In view of the foregoing problems, this invention thus provides a control apparatus for a diesel engine able to realize a gearshift appropriate for the running state of a vehicle.

A first aspect of the invention relates to a control apparatus for an automatic transmission for a diesel engine, which i) is applied to a vehicle in which is mounted a diesel engine in which fuel is injected based on a comparison of a required value for a fuel injection quantity and an upper limit value for the fuel injection quantity, and the upper limit value for the fuel injection quantity is corrected based on a predetermined running parameter, and ii) changes a gear of the automatic transmission in the vehicle. The control apparatus is characterised by the fact that it is provided with shift controlling means for changing the gear of the automatic transmission based on a comparison between a required value for an output from the diesel engine and an upper limit value for the output from the diesel engine calculated based on the upper limit value for the fuel injection quantity.

A second aspect of the invention relates to a control method for an automatic transmission for a diesel engine, i) which is applied to a vehicle in which is mounted a diesel engine in which fuel is injected based on a comparison of a required value for a fuel injection quantity and an upper limit value for the fuel injection quantity and the upper limit value for the fuel injection quantity is corrected based on a predetermined running parameter, ii) by which a gear of the automatic transmission in the vehicle is changed. The control method is characterised by including the steps of obtaining a required value for an output from the diesel engine; calculating an upper limit value for the output from the diesel engine based on the upper limit value for the fuel injection quantity; and changing the gear of the automatic transmission based on a comparison between the required value for the output and the upper limit value for the output.

According to the control apparatus and control method for an automatic transmission for a diesel engine, a gearshift is performed in the automatic transmission based on a comparison between the required value for the output from the diesel engine and the upper limit value for the output of the diesel engine calculated based on the upper limit value of the fuel injection quantity. Accordingly, because the gearshift is performed based on the output of the diesel engine, a gearshift which is appropriate for the running state of the vehicle is able to be performed.

The required value for the output from the diesel engine may be calculated based on the required value for the fuel injection quantity.

Also, the upper limit value for the output from the diesel engine may also be calculated based on the upper limit value for the fuel injection quantity while the correction of the upper limit value for the fuel injection quantity is monitored.

According to this control apparatus and control method, the upper limit value for the output from the diesel engine is calculated based on the upper limit for the fuel injection quantity to which the correction by the predetermined running parameter has been added, and the gearshift is performed in the automatic transmission based on the comparison between the upper limit value of this output and the required value for the output from the diesel engine calculated based on the required value for the fuel injection quantity. Accordingly, because the gearshift is performed based on the output from the diesel engine, a gearshift which is appropriate for the running state of the vehicle is able to be performed.

Further, the fuel injection quantity may also be determined based on an operation amount of an accelerator pedal, and the required value for the output from the diesel engine may be calculated from the acceleration amount of the accelerator pedal.

According to this control apparatus and control method, a gearshift is performed in the automatic transmission based on a comparison between the required value for the output from the diesel engine calculated from the operation amount of the accelerator pedal and the upper limit value for the output of the diesel engine calculated based on the upper limit value of the fuel injection quantity. Accordingly, because the gearshift is performed based on the output of the diesel engine, a gearshift which is appropriate for the running state of the vehicle is able to be performed.

When the required value for the output from the diesel engine is calculated from the operation amount of the accelerator pedal, the upper limit value for the output from the diesel engine may also be calculated based on the upper limit value for the fuel injection quantity while the correction of the upper limit value for the fuel injection quantity is monitored.

Further, a downshift may be performed in the automatic transmission when the required value for the output from the diesel engine is equal to, or greater than, the upper limit value for the output of the diesel engine.

According to this control apparatus and control method, a downshift is performed in the automatic transmission when the required value for the output from the diesel engine is equal to, or greater than, the upper limit value for the output of the diesel engine. That is, a downshift is performed when the amount of output actually obtained from the diesel engine becomes limited by the upper limit value for the output from the diesel engine. As a result, the output from the diesel engine increases as the speed thereof increases, so a decrease in acceleration performance due to an inability to obtain output from the diesel engine that corresponds to the required value for the output is appropriately suppressed.

Further, the running parameter preferably includes at least one of an atmospheric pressure (Patm), a supercharging pressure (Ptb), an intake air quantity (Fa), an intake air temperature (THa), an atmospheric temperature (THatm), a fuel injection pressure (Pf), a gear, and a coolant temperature (THw).

When the running parameter includes at least one of the atmospheric pressure (Patm), the supercharging pressure (Ptb), the intake air quantity (Fa), the intake air temperature (THa), the atmospheric temperature (THatm), the fuel injection pressure (Pf), the gear, and the coolant temperature (THw), output characteristics from the running state of the diesel engine are able to be appropriately obtained and a gearshift is able to be performed in the automatic transmission based on the required value for the output from the diesel engine and the upper limit value for the output.

### BRIEF DESCRIPTION OF THE DRAWINGS

The above-mentioned embodiment and other embodiments, objects, features, advantages, technical and industrial significance of this invention will be better understood by reading the following detailed description of the preferred embodiments of the invention, when considered in connection with the accompanying drawings, in which:
FIG. 1 is a schematic view of a control apparatus for an automatic transmission for a diesel engine according to a first exemplary embodiment of the invention;
FIG. 2 is a flowchart illustrating a fuel injection routine executed in the exemplary embodiment;
FIG. 3 is a map used for calculating a required injection quantity in the fuel injection routine of the exemplary embodiment;
FIG. 4 is a graph showing one example of a correlative relationship between an accelerator pedal operation amount and the fuel injection quantity from the fuel injection routine of the exemplary embodiment;
FIG. 5 is a flowchart illustrating a maximum injection quantity calculation routine executed in the exemplary embodiment;
FIG. 6 is a map used for calculating a base maximum injection quantity in a maximum injection quantity calculation routine of the exemplary embodiment;
FIG. 7 is a map used for calculating a maximum injection quantity correction coefficient in the maximum injection quantity calculation routine of the exemplary embodiment;
FIG. 8 is a flowchart illustrating a required output calculation routine executed in the exemplary embodiment;
FIG. 9 is a graph showing one example of a setting of the accelerator pedal operation amount and a required output in the exemplary embodiment;
FIG. 10 is a graph showing one example of the setting of the fuel injection quantity and the engine speed in the exemplary embodiment;
FIG. 11 is a flowchart illustrating a maximum injection quantity routine executed in the exemplary embodiment;
FIG. 12 is a map used for calculating a maximum possible output in the maximum injection quantity calculation routine of the exemplary embodiment;
FIG. 13 is a flowchart illustrating a shift execution determination routine executed in the exemplary embodiment;
FIG. 14 is a graph showing one example of a correlative relationship between the required output and the engine output;
FIG. 15 is a timing chart showing one example of a shift of the automatic transmission according to a shift routine of the exemplary embodiment;
FIG. 16 is a schematic view of part of a control apparatus for an automatic transmission for a diesel engine according to a second exemplary embodiment of the invention;
FIG. 17 is a flowchart illustrating a maximum injection quantity calculation routine executed in the exemplary embodiment;
FIG. 18 is a map used for calculating a maximum injection quantity in the maximum injection quantity calculation routine of the exemplary embodiment;
FIG. 19 is a flowchart illustrating a shift execution determination routine executed in the exemplary embodiment;
FIG. 20 is a schematic view of part of a control apparatus for an automatic transmission for a diesel engine according to a third exemplary embodiment of the invention;
FIG. 21 is a flowchart illustrating a maximum injection quantity calculation routine executed in the exemplary embodiment;
FIG. 22 is a map used for calculating a maximum injection quantity correction coefficient in the maximum injection quantity calculation routine of the exemplary embodiment;
FIG. 23 is a schematic view of part of a control apparatus for an automatic transmission for a diesel engine according to a fourth exemplary embodiment of the invention;
FIG. 24 is a flowchart illustrating a maximum injection quantity calculation routine executed in the exemplary embodiment;
FIG. 25 is a map used for calculating a maximum injection quantity in the maximum injection quantity calculation routine of the exemplary embodiment;
FIG. 26 is a schematic view of part of a control apparatus for an automatic transmission for a diesel engine according to a fifth exemplary embodiment of the invention;
FIG. 27 is a flowchart illustrating a maximum injection quantity calculation routine executed in the exemplary embodiment;
FIG. 28 is a map used for calculating a maximum injection quantity correction coefficient in the maximum injection quantity calculation routine of the exemplary embodiment;
FIG. 29 is a schematic view of part of a control apparatus for an automatic transmission for a diesel engine according to a sixth exemplary embodiment of the invention;
FIG. 30 is a flowchart illustrating a maximum injection quantity calculation routine executed in the exemplary embodiment;
FIG. 31 is a map used for calculating a maximum injection quantity correction coefficient in the maximum injection quantity calculation routine of the exemplary embodiment;
FIG. 32 is a schematic view of part of a control apparatus for an automatic transmission for a diesel engine according to a seventh exemplary embodiment of the invention;
FIG. 33 is a flowchart illustrating a maximum injection quantity calculation routine executed in the exemplary embodiment;
FIG. 34 is a map used for calculating a maximum injection quantity correction coefficient in the maximum injection quantity calculation routine of the exemplary embodiment;
FIG. 35 is a schematic view of part of a control apparatus for an automatic transmission for a diesel engine according to an eighth exemplary embodiment of the invention;
FIG. 36 is a flowchart illustrating a maximum injection quantity calculation routine executed in the exemplary embodiment;
FIG. 37 is a map used for calculating a maximum injection quantity in the maximum injection quantity calculation routine of the exemplary embodiment;
FIG. 38 is a schematic view of part of a control apparatus for an automatic transmission for a diesel engine according to a ninth exemplary embodiment of the invention;
FIG. 39 is a flowchart illustrating a maximum injection quantity calculation routine executed in the exemplary embodiment;
FIG. 40 is a map used for calculating a maximum injection quantity increase amount in the maximum injection quantity calculation routine of the exemplary embodiment;
FIG. 41 is a flowchart illustrating a shift execution determination routine executed by a control apparatus for an automatic transmission for a diesel engine according to a tenth exemplary embodiment of the invention;
FIG. 42 is a flowchart illustrating a shift execution determination routine executed by a control apparatus for an automatic transmission for a diesel engine according to an eleventh exemplary embodiment of the invention; and
FIG. 43 is a shift map determined specifying a shift line in the related art control apparatus of an automatic transmission.

### DETAILED DESCRIPTION OF THE PREFERRED EMBODIMENTS

In the following description and the accompanying drawings, the present invention will be described in more detail in terms of exemplary embodiments.

### (First Exemplary Embodiment)

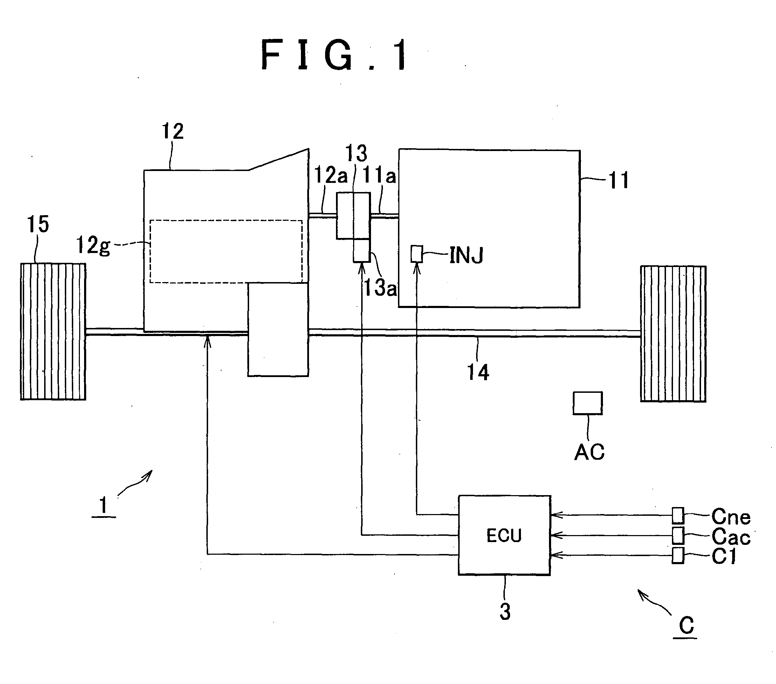

The control apparatus for an automatic transmission for a diesel engine according to a first exemplary embodiment of the invention will hereinafter be described with reference to FIGS. 1 to 15.

The overall structure of the apparatus will first be described referring to FIG. 1. In a vehicle 1, a clutch 13 is used to either allow or interrupt transmission of rotation from a crankshaft 11a, which serves as an output shaft of a diesel engine 11, to a transmission 12 (i.e., an automatic transmission for a diesel engine). When the clutch 13 is applied, the crankshaft 11a and an input shaft (i.e., input shaft 12) of the transmission 12 become connected such that rotation from the diesel engine 11 is transmitted to the transmission 12.

The diesel engine 11 is provided with an injector INJ for supplying fuel to the engine 11 by injection. The amount of output from the diesel engine 11 (i.e., engine output) can be adjusted by changing the timing with which fuel is injected by the injector INJ (i.e., by changing the fuel injection timing).

The transmission 12 is provided with a plurality of gears 12g which slow the rotation input from the crankshaft 11a. The speed reduction ratio of the rotation is determined according to the combination of these gears 12g (i.e., the gear that the automatic transmission is in). The rotation of the crankshaft 11a is reduced by the transmission 12 and that reduced rotation is then transmitted to driven wheels 15 via a drive shaft 14 so as to drive the vehicle 1.

The clutch 13 is a so-called automatic clutch which applies and releases by actuation of a clutch actuator 13a. When the vehicle 1 is idling, the clutch 13 is in a released state and when the vehicle 1 is running, the clutch 13 is in an applied state. When there is a gearshift in the transmission 12, the clutch actuator 13a momentarily releases the clutch 13.

The vehicle 1 is provided with an electronic control unit (i.e., hereinafter simply referred to as "ECU") 3 which comprehensively controls the vehicle 1. The following data is input to the ECU 3.
a) detection data from a rotational speed sensor Cne that detects an engine speed Ne which is the rotational speed of the diesel engine 11 (i.e., the rotational speed of the crankshaft 11a);
b) detection data from an accelerator pedal sensor Cac that detects an operation amount of an accelerator pedal AC (i.e., accelerator pedal operation amount Accl); and
c) detection data from an atmospheric pressure sensor C1 that detects an atmospheric pressure around the vehicle 1 (i.e., atmospheric pressure Patm).

The ECU 3 adjusts the quantity of the fuel injected (i.e., the fuel injection quantity qi) to the diesel engine 11 by controlling the injector INJ based on the various detection data and the like. As a result, it is possible to obtain an output from the diesel engine 11 (i.e., engine output Te) which corresponds to that required by the driver.

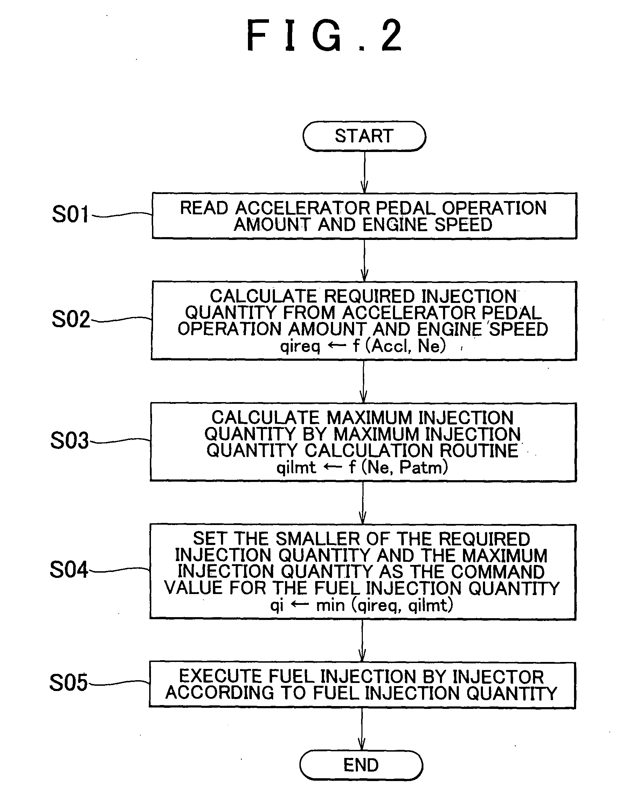

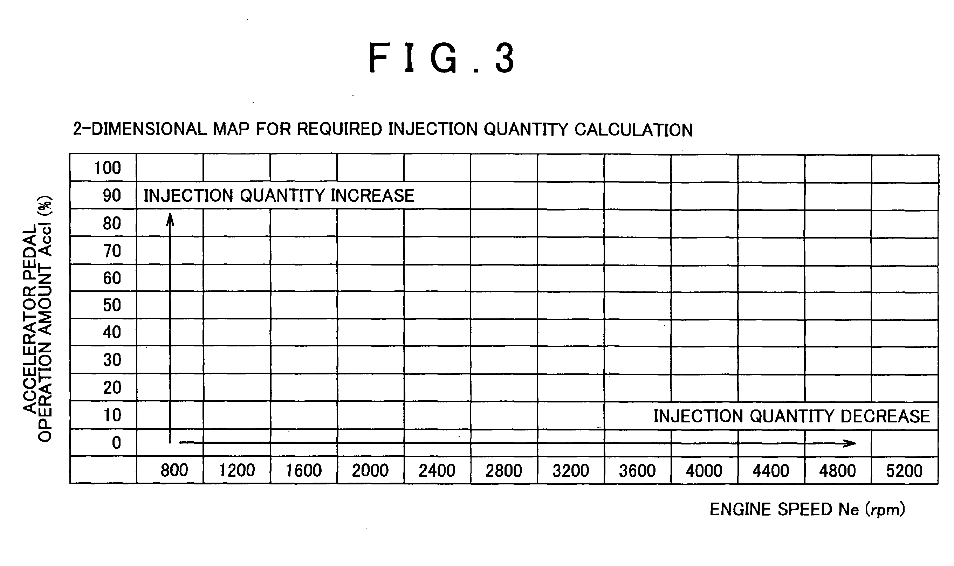

A fuel injection routine for setting the injection quantity of fuel to be injected by the injector INJ will now be described with reference to FIGS. 2 and 3. This routine is repeatedly executed at predetermined intervals of time.

Referring to FIG. 2, first the engine speed Engine speed Ne is read from the rotational speed sensor Cne and the accelerator pedal operation amount Accl is read from the accelerator pedal sensor Cac (step S01).

Next, a required value for the fuel injection quantity (required injection quantity qireq) is obtained by referencing the accelerator pedal operation amount Accl and the engine speed Ne on an injection quantity calculation map (FIG. 3) (step S02). That is, the required injection quantity qireq is obtained as follows.
qireq ← f (Accl, Ne)

An upper limit value (maximum injection quantity qilmt) for the fuel injection quantity is then obtained from the engine speed Ne and the atmospheric pressure Patm through a maximum fuel injection quantity calculation routine, to be described later (step S03). That is, the maximum injection quantity qilmt is obtained as follows.
qilmt ← f (Ne, Patm)

The maximum injection quantity qilmt indicates a limit value for the fuel injection quantity which is set to suppress the generation of black smoke from the combustion of the air-fuel mixture. The fuel injection is performed so that the fuel injection quantity qi from the injector INJ will not exceed this maximum injection quantity.

Next, the smaller of the required injection quantity qireq and the maximum injection quantity qilmt is set as the fuel injection quantity qi of the injector INJ. That is, the fuel injection quantity qi is determined as follows (step S04).
qireq ← min (qireq, qilmt)

The fuel injection to the diesel engine 11 is then executed while the opening timing of the injector INJ is adjusted according to the fuel injection quantity qi (step S05). Accordingly, in this routine, the fuel injection is performed by the injector INJ based on the correlation between the required injection quantity qireq determined from the accelerator pedal operation amount Accl and the maximum injection quantity qilmt determined according to the running state of the diesel engine 11.

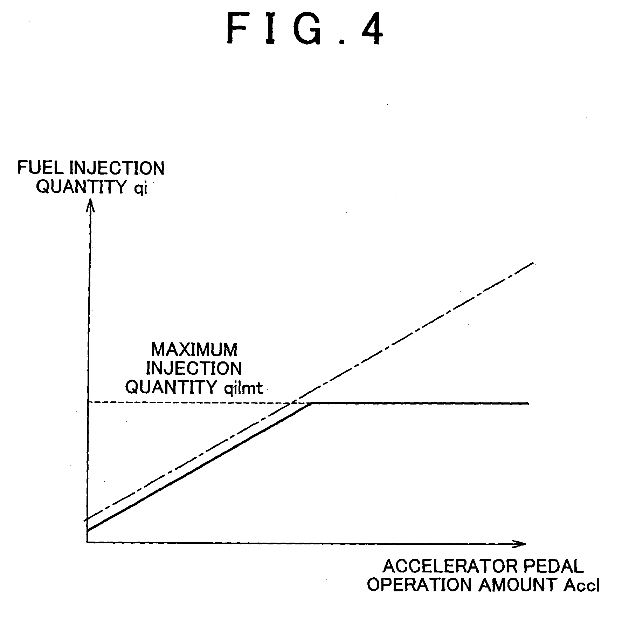

The relationship between the required injection quantity qireq and the fuel injection quantity qi will be described here with reference to FIG. 4. As shown in the drawing, the fuel injection quantity qi increases according to the required injection quantity qireq until the required injection quantity qireq reaches the maximum injection quantity qilmt (i.e., until the accelerator pedal operation amount Accl reaches the operation amount Acclx). After the required injection quantity qireq becomes equal to, or greater than, the maximum injection quantity qilmt, the required injection quantity qireq is limited to the maximum injection quantity qilmt despite the fact that the accelerator pedal operation amount Accl is still increasing.

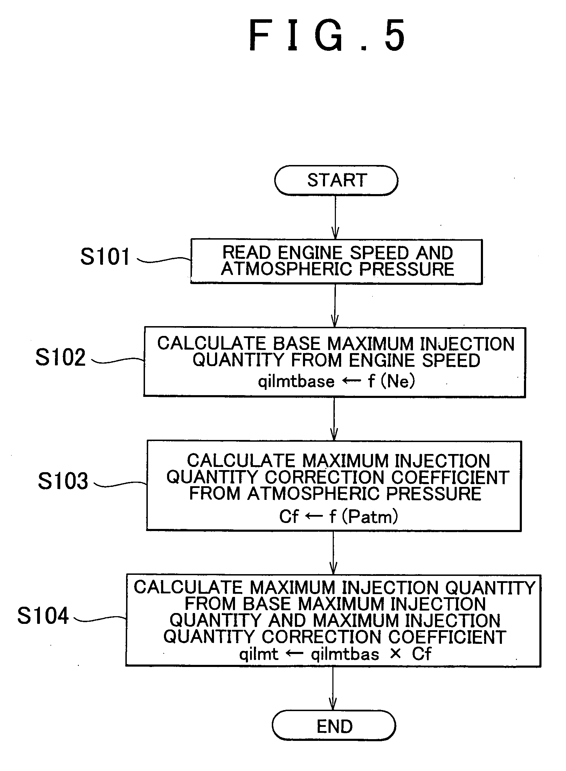

A maximum injection quantity calculation routine for calculating the maximum injection quantity will now be described with reference to FIGS. 5 to 7. This routine is a control which calculates the maximum injection quantity and includes an atmospheric pressure correction routine for correcting the maximum injection quantity in accordance with a change in the atmospheric pressure. The routine is repeatedly executed at predetermined intervals of time.

Referring to FIG. 5, first the engine speed Ne is read from the rotational speed sensor Cne and the atmospheric pressure Patm is read from the atmospheric pressure sensor C1 (step S 101).

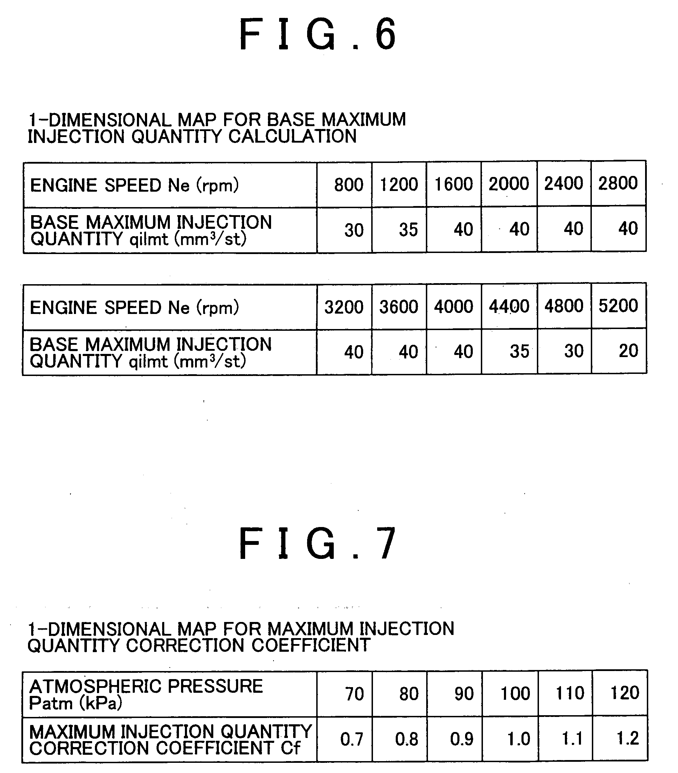

Next, a base maximum injection quantity qilmtbase is obtained by referencing the engine speed Ne on a maximum injection quantity calculation map (FIG. 6). That is, the base maximum injection quantity qilmtbase is obtained as follows.
qilmtbase ← f (Ne)

The base maximum injection quantity qilmtbase is a value set beforehand in accordance with an intake air quantity of the diesel engine and is used as the initial value of the maximum injection quantity qilmt.

Next a maximum injection quantity correction coefficient Cf is obtained by referencing the atmospheric pressure Patm on a correction coefficient calculation map (FIG. 7) (step S103). That is, the maximum injection quantity correction coefficient Cf is obtained as follows.
Cf ← f (Patm)

The maximum injection quantity qilmt is then calculated by multiplying the base maximum injection quantity qilmtbase by the maximum injection quantity correction coefficient Cf. That is, the maximum injection quantity qilmt is calculated as follows (step S 104).
qilmt ← qilmtbase × Cf

According to this routine, the maximum injection quantity qilmt, which was obtained according to the engine speed Ne, is corrected according to the atmospheric pressure Patm, and this corrected value is then used as the maximum injection quantity qilmt. That is, when the intake air quantity of the diesel engine fluctuates according to the atmospheric pressure, a maximum injection quantity qilmt is calculated which corresponds to the fluctuation in the intake air quantity.

When there is a gearshift in the transmission according to the related art control apparatus for an automatic transmission, it is conceivable that, when the vehicle-is running at high altitude, a downshift would not be executed despite the fact that the acceleration performance required by the driver is not able to be obtained, which may lead to a decrease in running performance.

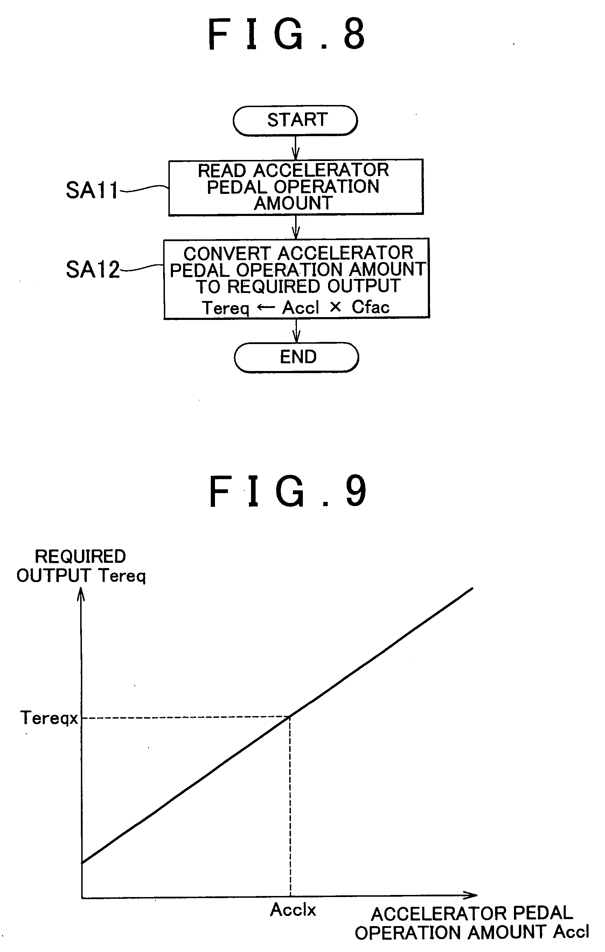

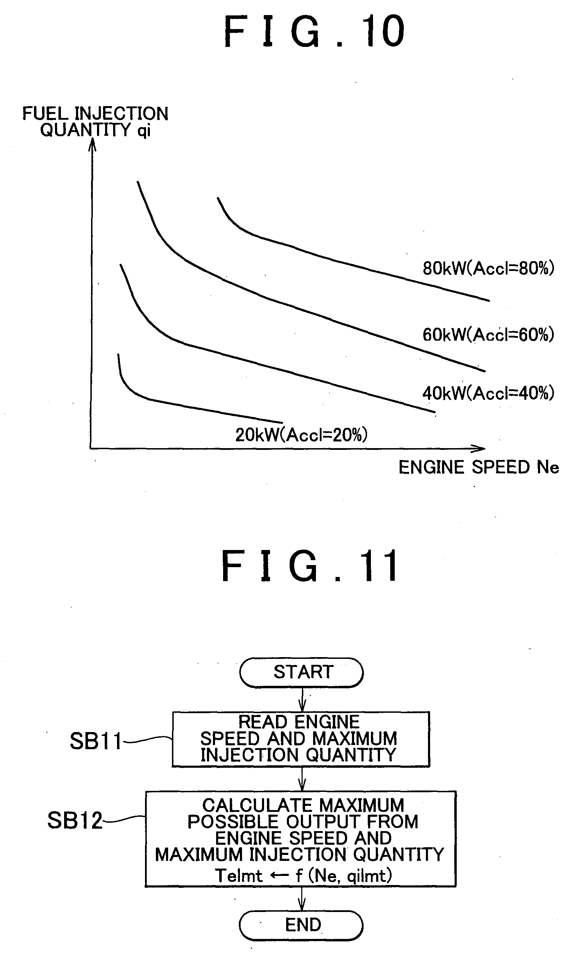

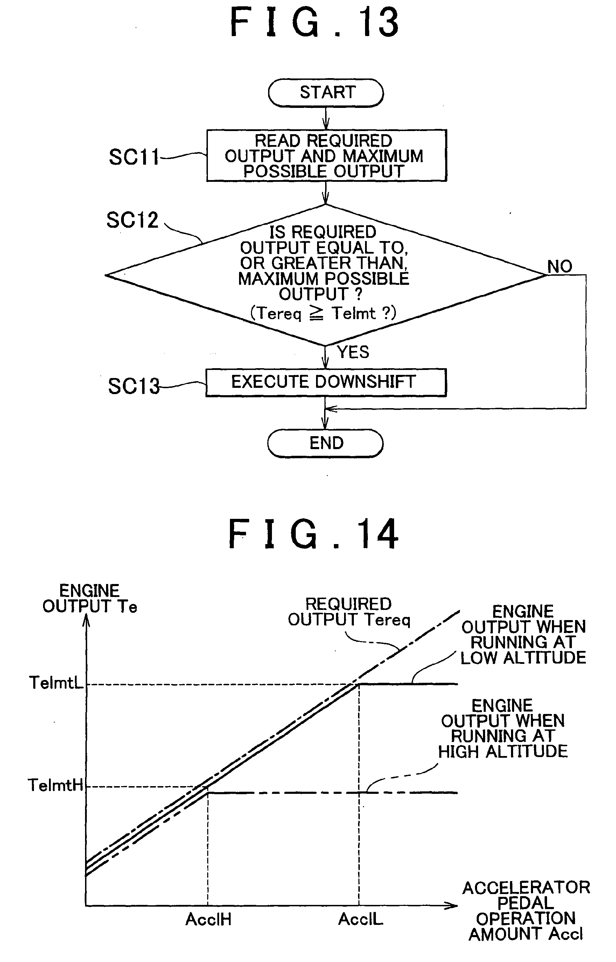

A downshift according to a shift routine described below according to the exemplary embodiment of the invention eliminates this concern. This shift routine will now be described with reference to FIGS. 8 to 13. This routine includes a maximum output calculation routine shown in FIG. 11 and a shift execution determination routine shown in FIG. 13.

A required output calculation routine for calculating the engine output required by the driver will first be described referring to FIGS. 8 to 10. This routine corresponds to a routine executed by required output calculating means and is repeatedly executed at predetermined intervals of time.

In the routine shown in FIG. 8, the accelerator pedal operation amount Accl from the accelerator pedal sensor Cac is first read (step SA11). The accelerator pedal operation amount Accl is then multiplied by an output conversion coefficient Cfac to convert the accelerator pedal operation amount Accl to a required value of output (required output Tereq) from the diesel engine 11. That is, the required output Tereq is calculated as follows (step SA12).
Tereq ← Accl × Cfac

According to this routine then, the required output Tereq is directly calculated from the accelerator pedal operation amount Accl. In this exemplary embodiment, the output characteristics are set such that the correlative relationship between the accelerator pedal operation amount Accl and the required output Tereq is always constant.

That is, the correlation between the accelerator pedal operation amount Accl and the required output Tereq is set so that there is a set required output Tereq corresponding to each degree of the accelerator pedal operation amount Accl, and when the accelerator pedal operation amount Accl is at the operation amount Acclx, a corresponding value (required output Tereqx) is constantly calculated as the required output Tereq. In other words, when the accelerator pedal operation amount Accl is constant, an always constant value is used for the required output Tereq of the driver regardless of a fluctuation in the engine speed Ne.

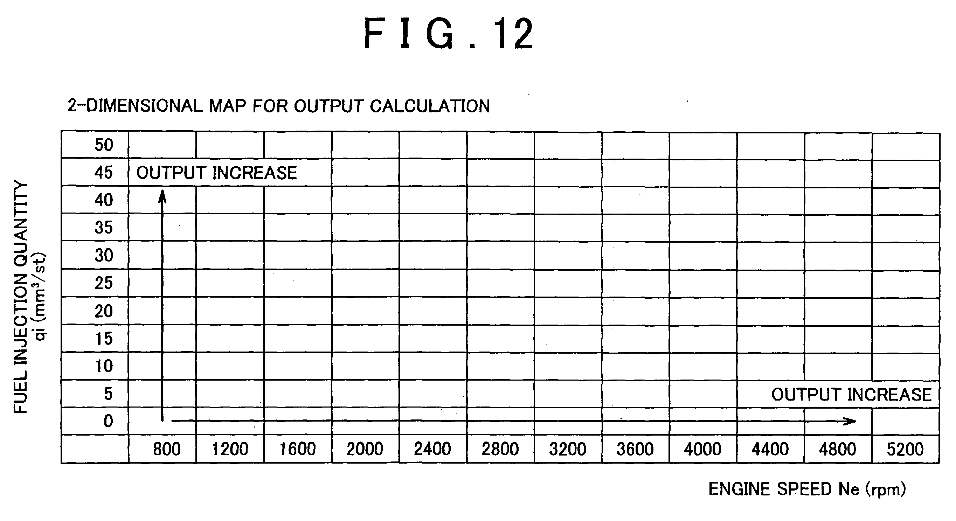

Next, the maximum output calculation routine for calculating an upper limit value (maximum possible output) of the output from the diesel engine will be described with reference to FIGS. 11 and 12. This routine corresponds to a routine executed by maximum output calculating means and is repeatedly executed at predetermined intervals of time.

A maximum possible output Telmt indicates the amount of engine output Te able to be obtained when the fuel injection quantity qi from the injector INJ is set to the maximum injection quantity qilmt. In other words, the maximum possible output Telmt is the maximum output possible from the diesel engine 11. Accordingly, even if the required output Tereq is equal to, or greater than, the maximum possible output Telmt, the engine output Te is limited to the maximum possible output Telmt.

In the routine shown in FIG. 11, first the engine speed Ne from the rotational speed sensor Cne and the maximum injection quantity qilmt calculated in the maximum injection quantity calculation routine (FIG. 5) are read (step SB11).

Next, the maximum possible output Telmt is obtained by referencing the engine speed Ne and the maximum injection quantity qilmt on an output calculation map (FIG. 12) (step SB12). That is, the maximum possible output Telmt is obtained as follows.
Telmt ← f (Ne, qilmt)

According to this routine, the maximum possible output Telmt is obtained according to the engine speed Ne and the maximum injection quantity qilmt. Next, a shift execution determination routine will be described with reference to FIG. 13. This routine corresponds to a routine executed by shift controlling means and is repeatedly executed at predetermined intervals of time.

In the routine shown FIG. 13, first the required output Tereq obtained in the required output calculation routine (FIG. 8) and the maximum possible output Telmt obtained in the maximum output calculation routine (FIG. 11) are read (step SC11).

Then it is determined whether the required output Tereq is equal to, or greater than, the maximum possible output Telmt. That is, it is determined whether Tereq ≥ Telmt is satisfied (step SC12).

When the required output Tereq is equal to, or greater than, the maximum possible output Telmt, a downshift is performed to shift the transmission 12 into a lower gear (step SC13).

When the required output Tereq is less than the maximum possible output Telmt, however, the transmission 12 is maintained in its current gear and the routine ends. Thus, according to the routine, when the required output Tereq is equal to, or greater than, the maximum possible output Telmt, i.e., when the required output Tereq is no longer able to be reflected in the engine output Te, a downshift is performed in the transmission 12.

The effects obtained through the shift routine will now be described with reference to FIG. 14. FIG. 14 illustrates the relationship between the engine output and the accelerator pedal operation amount when the vehicle speed is constant.

When the accelerator pedal operation amount Accl and the required output Tereq are set to have a proportional relationship such as that shown by the single dash line, the engine output Te shifts as described below when the vehicle runs at high and low altitudes.

When the maximum injection quantity qilmt is set to the initial value (i.e., the base maximum injection quantity qilmtbase) while the vehicle is running at low altitude, the engine output Te shifts in the following manner (the solid line in FIG. 14).
a) The engine output Te increases according to the accelerator pedal operation amount Accl until the required output Tereq reaches a maximum possible output TelmtL corresponding to the base maximum injection quantity qilmtbase.
b) After the required output Tereq exceeds the maximum possible output TelmtL corresponding to the base maximum injection quantity qilmtbase, the engine output Te is limited to the maximum possible output TelmtL despite the fact that the accelerator pedal operation amount Accl continues to increase.

On the other hand, when the maximum injection quantity qilmt is set to a value lower (i.e., a maximum injection quantity qilmtH) than the initial value due to being corrected according to the atmospheric pressure while the vehicle is running at high altitude, the engine output Te shifts as follows (the double dash line in FIG. 14).
a) The engine output Te increases according to the accelerator pedal operation amount Accl until the required output Tereq reaches a maximum possible output TelmtH corresponding to the maximum injection quantity qilmtH.
b) After the required output Tereq exceeds the maximum possible output TelmtH corresponding to the maximum injection quantity qilmtH, the engine output Te is limited to the maximum possible output TelmtH despite the fact that the accelerator pedal operation amount Accl continues to increase.

When the related art shift control is performed while the vehicle is running at the high and low altitudes assumed above, a downshift is not performed in either case until the accelerator pedal operation amount crosses a predefined shift line (accelerator pedal operation amount AcclL).

Accordingly, when running at high altitude, the vehicle runs with the engine output Te being limited to the maximum possible output Telmt from after the accelerator pedal operation amount has reached the operation amount AcclH (i.e., an operation amount where the required output Tereq has reached the maximum possible output Telmt) until it reaches the operation amount AcclL (i.e., until the accelerator pedal operation amount is such that a downshift will be performed).

Accordingly, because the related art shift routine controls the downshift based on the correlation between the accelerator pedal operation amount at that time and the predetermined operation amount, it is difficult to appropriately reflect the acceleration performance required by the driver in the behavior of the vehicle when the driving environment and the like changes.

On the other hand, the shift control according to the exemplary embodiment monitors the shift in the maximum possible output and performs a downshift based on the correlation between the maximum output and the required output. Therefore, it is possible to prevent the engine output from being kept constant despite an increase in the required output. That is, regardless of whether the vehicle is being driven at low or high altitude, as shown in FIG. 14, a downshift is performed when the engine output Te corresponding to the required output Tereq is no longer able to be obtained (i.e., when the required output Tereq is equal to, or greater than, the maximum possible output Telmt). Accordingly, acceleration performance required by the driver is able to be appropriately maintained because the engine output can be increased with an increase in engine speed.

Accordingly, in this exemplary embodiment, because it is determined whether the acceleration performance required by the driver is reflected in the behavior of the vehicle by a comparison between the required output and the maximum possible output, and the downshift is performed based on the determination results, acceleration demanded by the driver is able to be appropriately achieved.

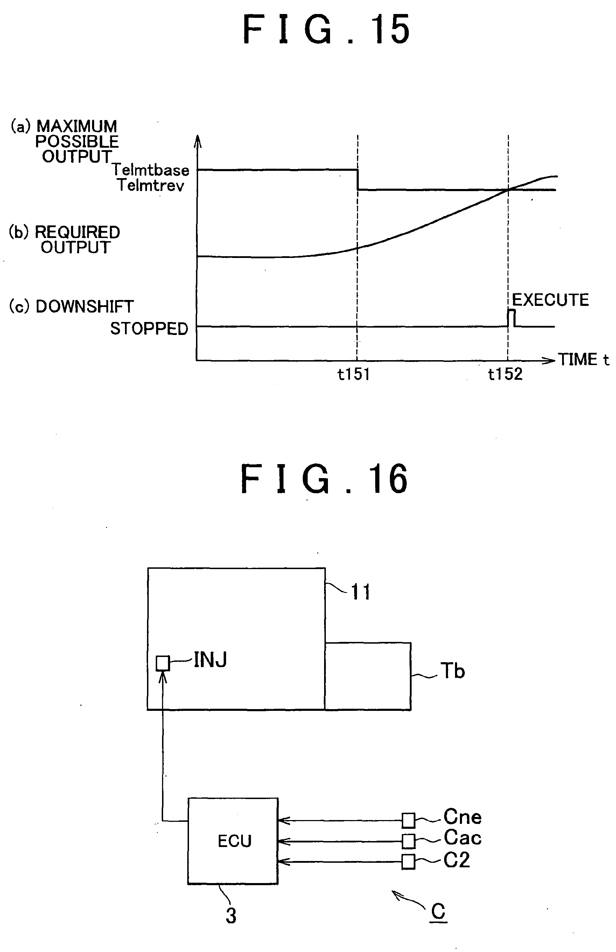

Next, an example of a shift in the automatic transmission according to a shift routine of the exemplary embodiment will be described with reference to FIG. 15. At time t151 while the vehicle is running, the maximum injection quantity qilmt is corrected with the atmospheric pressure Patm to be a value (i.e., maximum injection quantity qilmtrev) smaller than the base maximum injection quantity qilmtbase.

The maximum possible output Telmt at this time shifts from the maximum possible output Telmtbase corresponding to the base maximum injection quantity qilmtbase to the maximum possible output Telmrev corresponding to the maximum injection quantity qilmtrev in response to the correction of the maximum injection quantity qilmt (FIG. 15(a)). In the FIG. 15(a), the maximum possible output Telmt is shown changing in a step-like manner. In reality, however, processing is performed to change the maximum possible output Telmt from the maximum possible output Telmtbase to the maximum possible output Telmrev gradually.

From time t151 to time t152 the required output Tereq increases and at time t152, when it has been detected that the required output Tereq is equal to, or greater than, the maximum possible output Telmrev, a downshift is performed (FIGS. 15(a) to (c)).

The shift routine for the automatic transmission continues in the same manner as above after time t152. More specifically, according to the output control apparatus for an automatic transmission for a diesel engine according to the first exemplary embodiment, the following exemplary effects can be obtained.

(1) According to the exemplary embodiment, the shift between the required output Tereq and the maximum possible output Telmt is monitored and when the required output Tereq becomes equal to, or greater than, the maximum possible output Telmt, a downshift is performed in the transmission 12. Because a downshift is performed when the engine output Te corresponding to the required output Tereq is no longer able to be obtained, the acceleration required by the driver is able to be appropriately reflected in the vehicle behavior. This structure enables a gearshift suitable for the driving state of the vehicle to be achieved.

(2) Further, because there is no need to provide a shift map to perform the gearshift as there is with the related art control apparatus for an automatic transmission, it is possible to reduce the load on the ECU 3.

(3) According to this exemplary embodiment, there is a correlative relationship between the accelerator pedal operation amount Accl and the required output Tereq such that a specific required output Tereq is determined according to a specific accelerator pedal operation amount Accl. Therefore, the fact that the accelerator pedal operation amount Accl can be taken as the required output Tereq makes it easy to calculate the required output Tereq.

(4) Also, the required output Tereq is set to a value corresponding with the accelerator pedal operation amount Accl, regardless of a fluctuation in the engine speed Ne. It is therefore possible to appropriately maintain the acceleration performance required by the driver even if the engine speed Ne changes due to a gearshift being performed.

The first exemplary embodiment can also be modified as follows, for example. - In the first exemplary embodiment, the maximum injection quantity correction coefficient Cf is obtained with the map shown in FIG. 7. Alternatively, however, any suitable map may be used as long as it is such that the maximum injection quantity correction coefficient is set according to the atmospheric pressure.
- In the first exemplary embodiment, the maximum injection quantity correction coefficient Cf is obtained by referencing the atmospheric pressure Patm on the map shown in FIG. 7. Alternatively, however, the maximum injection quantity correction coefficient Cf can also be obtained by applying the atmospheric pressure Patm to a predetermined function which specifies the relationship between the atmospheric pressure and the maximum injection quantity correction coefficient.
- In the first exemplary embodiment, the maximum injection quantity calculation routine shown in FIG. 5 is executed. As long as the control is such that the maximum injection quantity according to the atmospheric pressure is calculated, however, the invention is not limited to the routine shown in this exemplary embodiment, i.e., the maximum injection quantity can also be calculated by another suitable routine.

### (Second Exemplary Embodiment)

The control apparatus for an automatic transmission for a diesel engine according to a second exemplary embodiment of the invention will hereinafter be described with reference to FIGS. 16 to 19.

In the second exemplary embodiment, the invention is applied to the automatic transmission in a vehicle in which is mounted an automatic transmission and a diesel engine that sets the maximum injection quantity according to a supercharging state.

When supercharging is being performed with a supercharger in the diesel engine, a supercharging pressure correction routine is executed which corrects the maximum injection quantity according to the supercharging pressure (i.e., the pressure in the intake manifold) in order to keep the maximum injection quantity at an appropriate value in accordance with the supercharging state. The value of the maximum possible output differs depending on the correction of the maximum injection quantity.

Therefore, this exemplary embodiment enables an appropriate downshift to be achieved by executing a shift routine which takes a fluctuation in the maximum possible output due to the supercharge pressure correction routine into consideration.

The general structure of the apparatus according to the second exemplary embodiment of the invention will first be described with reference to FIG. 16. Because the structure of the apparatus according to this exemplary embodiment is similar to that of the first exemplary embodiment, only those points that differ from the first exemplary embodiment will be described.

According to the second exemplary embodiment, the diesel engine 11 is also provided with a supercharger Tb capable of increasing the air quantity drawn into the diesel engine 11.

Various data from the various sensors in the detection system C are input to the ECU 3. This data includes:
a) detection data from the rotational speed sensor Cne;
b) detection data from the accelerator pedal sensor Cac; and
c) detection data from a supercharging pressure sensor C2 for detecting a pressure (supercharging pressure Ptb) inside the intake manifold of the diesel engine 11.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

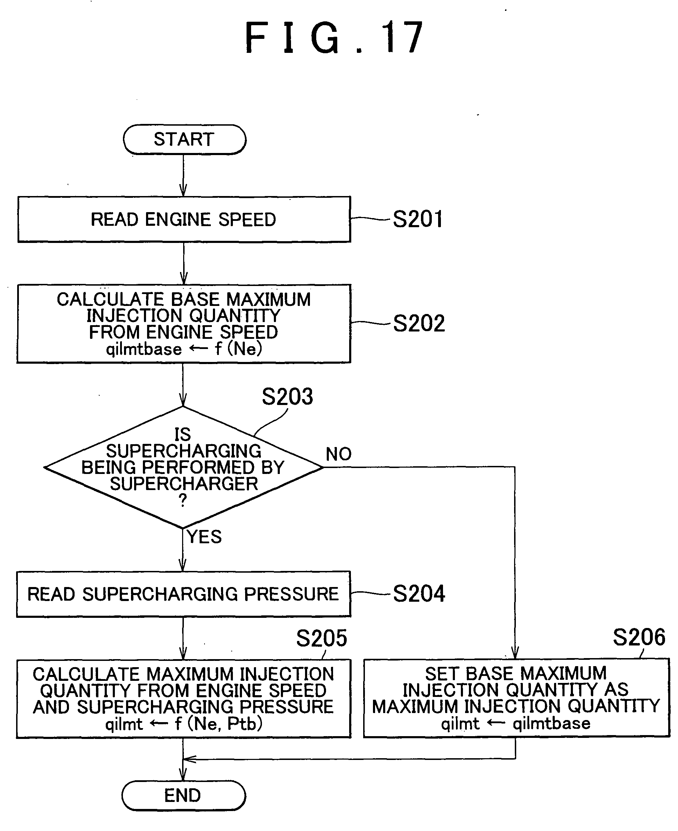

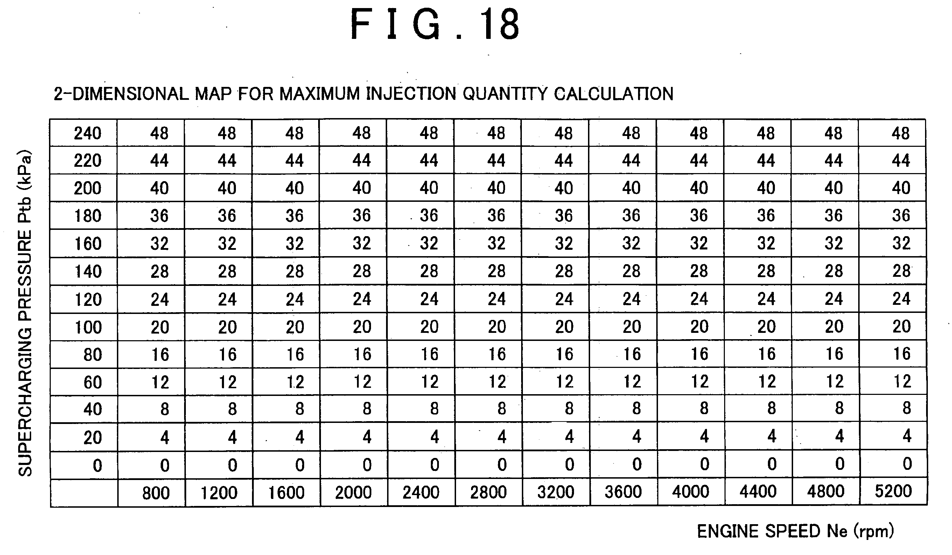

The maximum injection calculation routine will now be described referring to FIGS. 17 and 18. This routine is control for calculating the maximum injection quantity and includes the supercharging pressure correction routine that corrects the maximum injection quantity according to a change in supercharging pressure. This routine is repeatedly executed at predetermined intervals of time.

In the routine shown in FIG. 17, the engine speed Ne is first read from the rotational speed sensor Cne (step S201). The base maximum injection quantity qilmtbase is then obtained by referencing the engine speed Ne on the maximum injection quantity calculation map (FIG. 6) (step S202). That is, the base maximum injection quantity qilmtbase is obtained as follows.
qilmtbase ← f (Ne)

Next, it is determined whether supercharging is being performed by the supercharger Tb (step S203). If supercharging is being performed, the supercharging pressure Ptb from the supercharging pressure sensor C2 is read (step S204) and the maximum injection quantity qilmt is obtained by referencing the engine speed Ne and the supercharging pressure Ptb on a maximum injection quantity calculation map (FIG. 18) (step S205). That is, the maximum injection quantity qilmt is obtained as follows.
qilmt ← (Ne, Ptb)

On the other hand, when supercharging is not being performed, the base maximum injection quantity qilmtbase is set (step S206) as the maximum injection quantity qilmt, i.e.,
qilmt ← qilmtbase.

According to this routine then, the maximum injection quantity qilmt is obtained according to the supercharging state. That is, the maximum injection quantity qilmt is corrected taking into consideration the fluctuation of the intake air quantity due to supercharging.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is the required output Tereq is calculated directly from the accelerator pedal operation amount Accl.

### (Maximum output calculation routine)

The maximum output calculation routine is performed in a manner similar to that of the maximum output calculation routine (FIG. 11) performed in the first exemplary embodiment. That is, the maximum possible output Telmt is obtained from the engine speed Ne and the maximum injection quantity qilmt.

### (Shift execution determination routine)

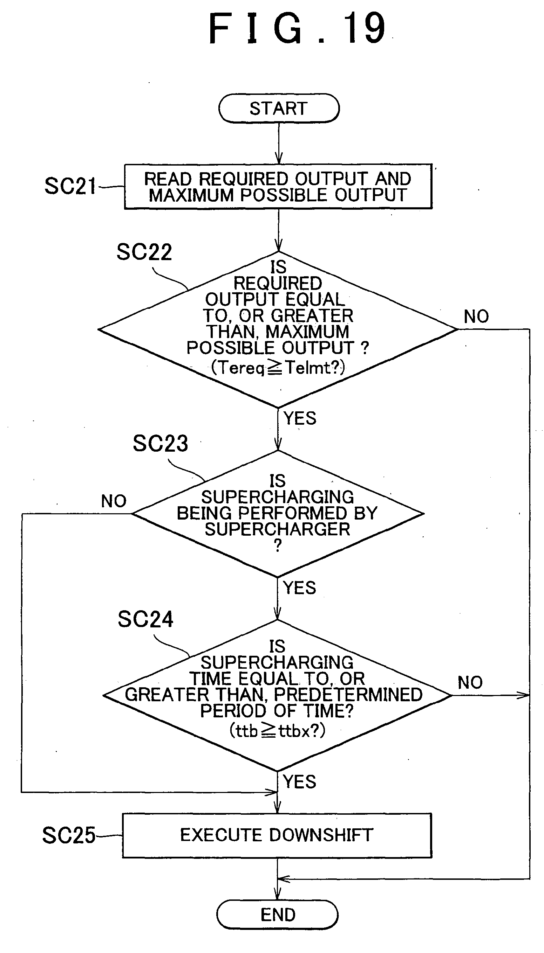

The shift execution determination routine will now be described with reference to FIG. 19. This routine corresponds to a routine executed by shift controlling means and is repeatedly executed at predetermined intervals of time.

In the routine shown in FIG. 19, the required output Tereq obtained in the required output calculation routine (FIG. 8) and the maximum possible output Telmt obtained in the maximum output calculation routine (FIG. 11) are first read (step SC21).

Next it is determined whether the required output Tereq is equal to, or greater than, the maximum possible output Telmt. That is, it is determined whether Tereq ≥ Telmt is satisfied (step SC22).

When the required output Tereq is equal to, or greater than, the maximum possible output Telmt, it is then determined whether supercharging is being performed by the supercharger Tb (step SC23). If supercharging is being performed, it is then determined whether an elapsed time (i.e., a supercharging time ttb) after the supercharging was started is equal to, or greater than, a predetermined period of time ttbx (step SC24).

When the supercharging time ttb is equal to, or greater than, the predetermined period of time ttbx, a downshift is performed to shift the transmission 12 into a lower gear (step SC25).

A downshift is also performed when the required output Tereq is equal to, or greater than, the maximum possible output Telmt but supercharging is not being performed (i.e., YES in step SC22; NO in step SC23).

When the required output Tereq is less than the maximum possible output Telmt, or when the supercharging time ttb is less than the predetermined period of time ttbx, however, the transmission 12 is maintained in its current gear and the routine ends (i.e., NO in step SC22; NO in step SC24).

Thus, according to the routine, when supercharging is not being performed and the required output Tereq is equal to, or greater than, the maximum possible output Telmt, a downshift is performed in the transmission 12. Also, even if the required output Tereq is equal to, or greater than, the maximum possible output Telmt and supercharging is being performed, the transmission 12 is kept from downshifting until the supercharging time ttb is equal to, or greater than, the predetermined period of time ttbx.

Because there tends to be a delay in the supercharging by the supercharger, it takes a certain amount of time for the maximum possible output to rise from the supercharging. Therefore, in the routine, when supercharging is being performed, a downshift is not performed until the supercharging time ttb is equal to, or greater than, the predetermined period of time ttbx, i.e., a downshift is not performed for the time for which it is estimated that the maximum possible output Telmt will rise from the supercharging.

Accordingly, fuel efficiency is able to be improved because it is possible to use the same gear for a longer period of time by using the increase in the maximum possible output Telmt from the supercharging.

Thus it is possible according to the exemplary embodiment to achieve the appropriate acceleration required by the driver because the fluctuation in the maximum possible output is monitored taking into consideration the correction of the maximum injection quantity by the supercharging pressure correction routine and a downshift is performed based on a comparison between the required output and the maximum possible output.

In addition to the effects (1) to (4) above from the first exemplary embodiment, the control apparatus for an automatic transmission for a diesel engine according to the second exemplary embodiment as described in detail above also yields the following effects.

(5) According to the second exemplary embodiment, even when the required output Tereq is equal to, or greater than, the maximum possible output Telmt and supercharging is being performed, a downshift is not performed until the supercharging time ttb is equal to, or greater than, the predetermined period of time ttbx. Therefore, because it is possible to effectively utilize the rise in the maximum output from the supercharging, it is possible to appropriately increase the fuel efficiency.

The second exemplary embodiment can also be modified as follows, for example.
- In the second exemplary embodiment, the maximum injection quantity qilmt is obtained with the map shown in FIG. 18. Alternatively, however, any suitable map may be used as long as the maximum injection quantity is set according to the supercharging pressure.
- In the second exemplary embodiment, the maximum injection quantity qilmt is obtained by referencing the engine speed Ne and the supercharging pressure Ptb on the map shown in FIG. 18. Alternatively, however, the maximum injection quantity qilmt can also be obtained by applying the engine speed Ne and the supercharging pressure Ptb to a predetermined function which specifies the relationship between the engine speed, the supercharging pressure, and the maximum injection quantity.
- In the second exemplary embodiment, the maximum injection quantity calculation routine shown in FIG. 17 is executed. As long as the control calculates the maximum injection quantity corresponding to the supercharging pressure, however, the invention is not limited to the routine shown in this exemplary embodiment, i.e., the maximum injection quantity can also be calculated by another suitable routine.
- In the second exemplary embodiment, a downshift is performed when the required output Tereq is equal to, or greater than, the maximum possible output Telmt and the supercharging time ttb is equal to, or greater than, the predetermined period of time ttbx. Alternatively, however, a downshift can also be performed when the required output Tereq is equal to, or greater than, the maximum possible output Telmt.
- In the second exemplary embodiment, the predetermined period of time ttbx, which is set, is made the determination value. Alternatively, however, the predetermined period of time ttbx can be made to vary according to the driving state of the vehicle and the like.

### (Third Exemplary Embodiment)

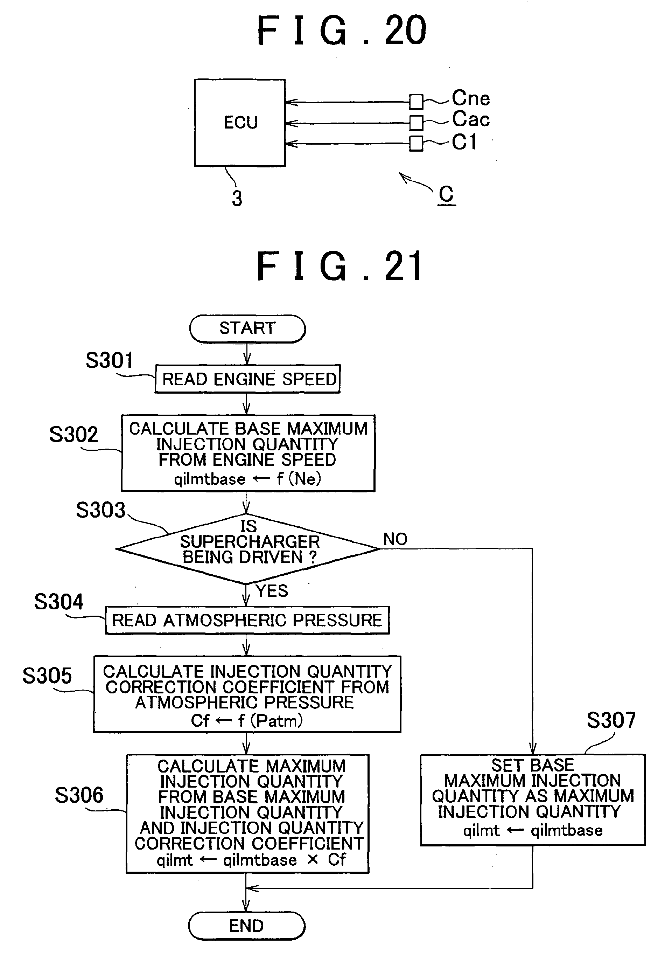

The control apparatus for an automatic transmission for a diesel engine according to a third exemplary embodiment of the invention will hereinafter be described with reference to FIGS. 20 to 22.

In the third exemplary embodiment, the invention is applied to the automatic transmission in a vehicle in which is mounted an automatic transmission and a diesel engine that sets the maximum injection quantity according to the atmospheric pressure in order to prevent an overspeed of the supercharger.

When the diesel engine is provided with a supercharger, an overspeed avoidance correction routine for correcting the maximum injection quantity according to the atmospheric pressure is performed in order to prevent damage to the supercharger due to an overspeed. The value of the maximum possible output differs depending on the correction of the maximum injection quantity.

Therefore, this exemplary embodiment enables an appropriate downshift to be achieved by a shift routine which takes fluctuation in the maximum possible output due to the overspeed avoidance correction routine into consideration.

The general structure of the apparatus will first be described with reference to FIG. 20. Because the structure of the apparatus according to this exemplary embodiment is basically similar to that of the second exemplary embodiment, only those points that differ from the second exemplary embodiment will be described.

Various data from the various sensors in the detection system C are input to the ECU 3. This data includes:
a) detection data from the rotational speed sensor Cne;
b) detection data from the accelerator pedal sensor Cac; and
c) detection data from the atmospheric pressure sensor C1.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

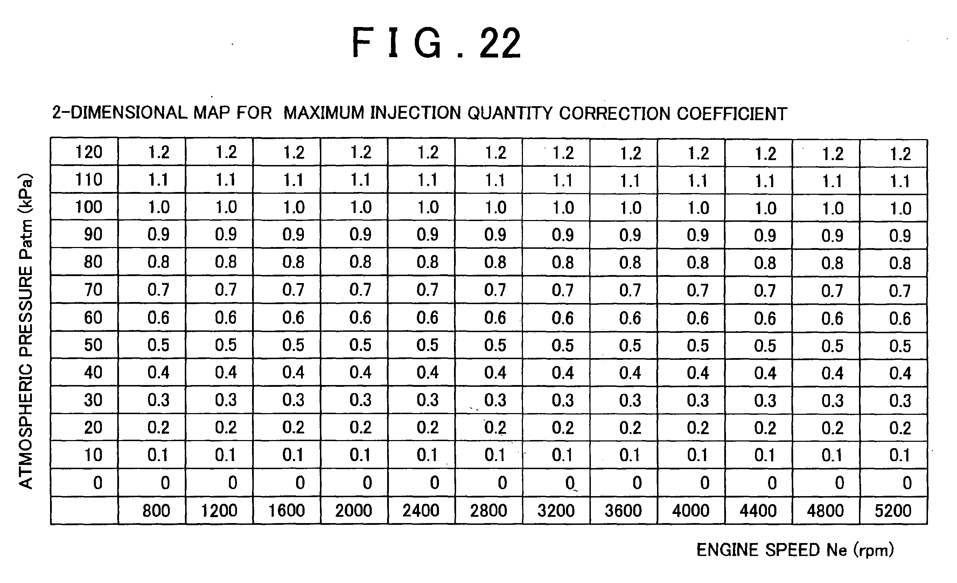

The maximum injection calculation routine will now be described referring to FIGS. 21 and 22. This routine is control for calculating the maximum injection quantity and includes the overspeed avoidance correction routine that corrects the maximum injection quantity according to the atmospheric pressure. This process is repeatedly executed at predetermined intervals of time.

In the routine shown in FIG. 21, the engine speed Ne is first read from the rotational speed sensor Cne (step S301). The base maximum injection quantity qilmtbase is then obtained by referencing the engine speed Ne on the maximum injection quantity calculation map (FIG. 6) (step S302). That is, the base maximum injection quantity qilmtbase is obtained as follows.
qilmtbase ← f (Ne)

Next, it is determined whether the supercharger Tb is being driven (step S303). When the supercharger Tb is being driven, the atmospheric pressure Patm from the atmospheric pressure sensor C1 is read (step S304) and the maximum injection quantity correction coefficient Cf is obtained by referencing the engine speed Ne and the atmospheric pressure Patm on the correction coefficient calculation map (FIG. 22) (step S305). That is, the maximum injection quantity qilmt is obtained as follows.
Cf ← f (Ne, Patm)

Next, the maximum injection quantity qilmt is calculated by multiplying the base maximum injection quantity qilmtbase by the maximum injection quantity correction coefficient Cf. That is, the maximum injection quantity qilmt is obtained as follows (step S306).
qilmt ← qilmtbase × Cf

On the other hand, when the supercharger Tb is not being driven, the base maximum injection quantity qilmtbase is set (step S307) as the maximum injection quantity qilmt, i.e.,
qilmt ← qilmtbase.

According to this routine then, by correcting the maximum injection quantity qilmt according to the atmospheric pressure when the supercharger is being driven, overspeed of the supercharger Tb is able to be avoided.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) in the first exemplary embodiment. That is, the maximum possible output Telmt is obtained from the engine speed Ne and the maximum injection quantity qilmt.

### (Shift execution determination routine)

The shift execution determination routine is performed in a manner similar to that of the shift execution determination routine (FIG. 13) in the first exemplary embodiment. That is, a downshift is performed when the required output Tereq is equal to, or greater than, the maximum possible output Telmt.

Thus, it is possible according to the exemplary embodiment to achieve the appropriate acceleration required by the driver because the fluctuation in the maximum possible output is monitored taking into consideration the correction of the maximum injection quantity by the overspeed avoidance correction routine and a downshift is performed based on a comparison between the required output and the maximum possible output.

In addition to the effects (1) to (4) above from the first exemplary embodiment, the control apparatus for an automatic transmission for a diesel engine according to the third exemplary embodiment as described in detail above also yields the following effects.

The third exemplary embodiment can also be modified as follows, for example.
- In the third exemplary embodiment, the maximum injection quantity correction coefficient Cf is obtained with the map shown in FIG. 22. Alternatively, however, any suitable map may be used as long as the maximum injection quantity correction coefficient is set according to the atmospheric pressure.
- In the third exemplary embodiment, the maximum injection quantity correction coefficient Cf is obtained by referencing the engine speed Ne and the atmospheric pressure Patm on the map shown in FIG. 22. Alternatively, however, the maximum injection quantity correction coefficient Cf can also be obtained by applying the engine speed Ne and the atmospheric pressure Patm to a predetermined function which specifies the relationship between the engine speed, the atmospheric pressure, and the maximum injection quantity correction coefficient.
- In the third exemplary embodiment, the maximum injection quantity calculation routine shown in FIG. 21 is executed. As long as the control calculates the maximum injection quantity according to the atmospheric pressure, however, the invention is not limited to the routine shown in this exemplary embodiment, i.e., the maximum injection quantity can also be calculated by another suitable routine.

### (Fourth Exemplary Embodiment)

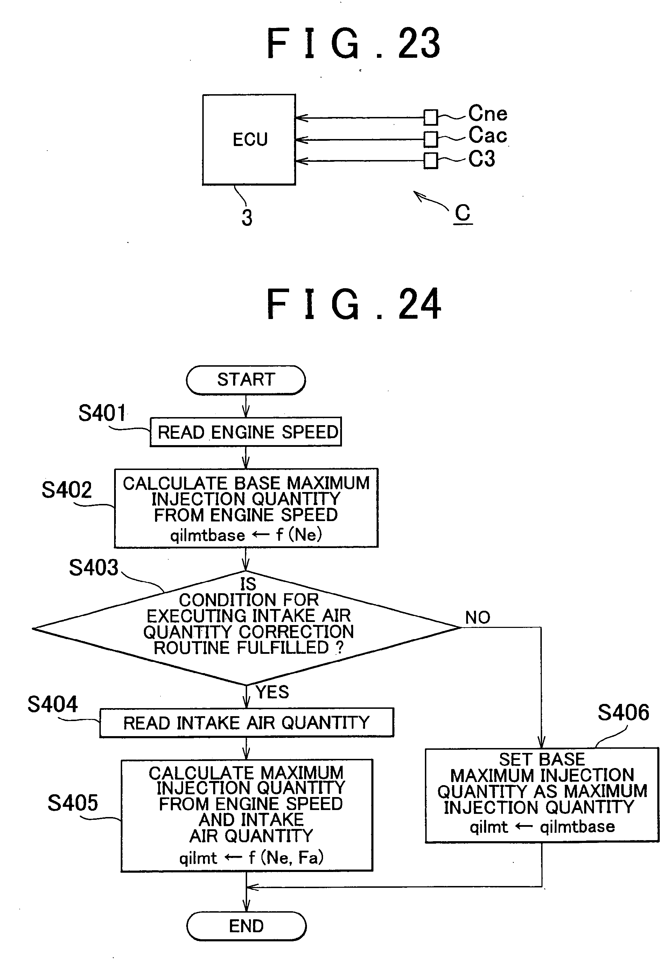

The control apparatus for an automatic transmission for a diesel engine according to a fourth exemplary embodiment of the invention will hereinafter be described with reference to FIGS. 23 to 25.

In the fourth exemplary embodiment, the invention is applied to the automatic transmission in a vehicle in which is mounted an automatic transmission and a diesel engine that sets the maximum injection quantity according to an intake air quantity.

In the diesel engine, an intake air quantity correction routine for correcting the maximum injection quantity according to an intake air quantity detected by the sensor is performed to keep the maximum injection quantity at an appropriate value in accordance with fluctuation in the intake air quantity from exhaust gas recirculation (EGR). The value of the maximum possible output differs depending on the correction of the maximum injection quantity.

Therefore, this exemplary embodiment enables an appropriate downshift to be achieved by a shift routine which takes the fluctuation in the maximum possible output due to the intake air quantity correction routine into consideration.

The general structure of the apparatus will first be described with reference to FIG. 23. Because the structure of the apparatus according to this exemplary embodiment is basically similar to that of the first exemplary embodiment, only those points that differ from the first exemplary embodiment will be described.

Various data from the various sensors in a detection system C are input to the ECU 3. This data includes:
a) detection data from the rotational speed sensor Cne;
b) detection data from the accelerator pedal sensor Cac; and
c) detection data from an airflow meter C3 for detecting an intake air quantity (Fa) drawn into the diesel engine 11.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

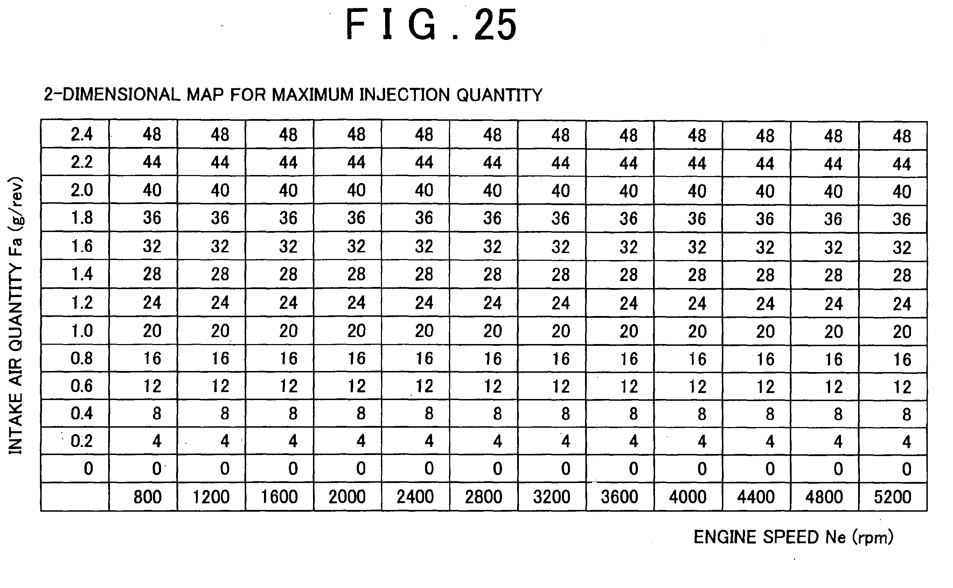

The maximum injection calculation routine will now be described referring to FIGS. 24 and 25. This routine is control for calculating the maximum injection quantity and includes the intake air quantity correction routine that corrects the maximum injection quantity according to the intake air quantity detected by the sensor. This process is repeatedly executed at predetermined intervals of time.

In the routine shown in FIG. 24, the engine speed Ne is first read from the rotational speed sensor Cne (step S401). The base maximum injection quantity qilmtbase is then obtained by referencing the engine speed Ne on the maximum injection quantity calculation map (FIG. 6) (step S402). That is, the base maximum injection quantity qilmtbase is obtained as follows.
qilmtbase ← f (Ne)

Next, it is determined whether a condition for performing an intake air quantity correction (e.g., whether EGR is being executed) is fulfilled (step S403). When the condition for performing the intake air quantity correction is fulfilled, the intake air quantity Fa from the airflow meter C3 is read (step S404) and the maximum injection quantity qilmt is obtained by referencing the engine speed Ne and the intake air quantity Fa on the maximum injection quantity calculation map (FIG. 25) (step S405). That is, the maximum injection quantity qilmt is obtained as follows.
qilmt ← (Ne, Fa)

On the other hand, when the condition for performing the intake air quantity correction is not fulfilled, the base maximum injection quantity qilmtbase is set (step S406) as the maximum injection quantity qilmt, i.e.,
qilmt ← qilmtbase.

According to this routine then, the maximum injection quantity qilmt is obtained according to the intake air quantity Fa from the airflow meter C3. Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) performed in the first exemplary embodiment. That is, the maximum possible output Telmt is obtained from the engine speed Ne and the maximum injection quantity qilmt.

### (Shift execution determination routine)

The shift execution determination routine is performed in a manner similar to that of the shift execution determination routine (FIG. 13) in the first exemplary embodiment. That is, a downshift is performed when the required output Tereq is equal to, or greater than, the maximum possible output Telmt.

Thus, it is possible according to the exemplary embodiment to achieve the appropriate acceleration required by the driver because the fluctuation in the maximum possible output is monitored taking into consideration the correction of the maximum injection quantity by the intake air quantity correction routine and a downshift is performed based on a comparison between the required output and the maximum possible output.

In addition to the effects (1) to (4) above from the first exemplary embodiment, the control apparatus for an automatic transmission for a diesel engine according to the fourth exemplary embodiment as described in detail above also yields the following effects.

The fourth exemplary embodiment can also be modified as follows, for example.
- In the fourth exemplary embodiment, the maximum injection quantity qilmt is obtained with the map shown in FIG. 25. Alternatively, however, any suitable map may be used as long as the maximum injection quantity correction coefficient is set according to the intake air quantity.
- In the fourth exemplary embodiment, the maximum injection quantity qilmt is obtained by referencing the engine speed Ne and the intake air quantity Fa on the map shown in FIG. 25. Alternatively, however, the maximum injection quantity qilmt can also be obtained by applying the engine speed Ne and the intake air quantity Fa to a predetermined function which specifies the relationship between the engine speed, the intake air quantity, and the maximum injection quantity.
- In the fourth exemplary embodiment, the maximum injection quantity calculation routine shown in FIG. 24 is executed. As long as the control calculates the maximum injection quantity according to the intake air quantity, however, the invention is not limited to the routine shown in this exemplary embodiment, i.e., the maximum injection quantity can also be calculated by another suitable routine.

### (Fifth Exemplary Embodiment)

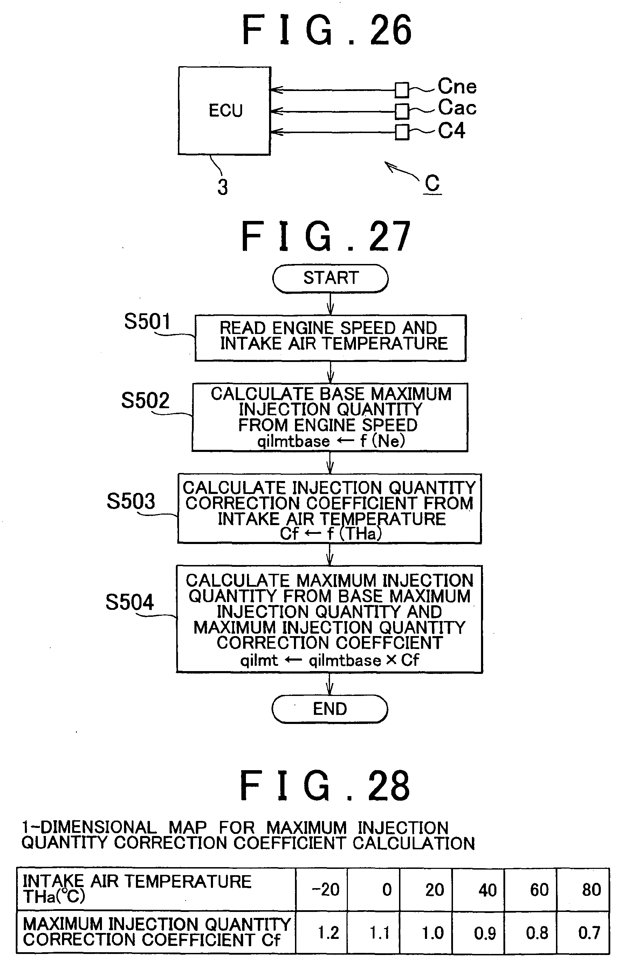

The control apparatus for an automatic transmission for a diesel engine according to a fifth exemplary embodiment of the invention will hereinafter be described with reference to FIGS. 26 to 28.

In the fifth exemplary embodiment, the invention is applied to the automatic transmission in a vehicle in which is mounted an automatic transmission and a diesel engine that sets the maximum injection quantity according to a temperature of the intake air.

In the diesel engine, an intake air temperature correction routine for correcting the maximum injection quantity according to the temperature of the intake air is performed in order to keep the maximum injection quantity at an appropriate value in accordance with a change in the density of the intake air. The value of the maximum possible output differs depending on the correction of the maximum injection quantity.

Therefore, this exemplary embodiment enables an appropriate downshift to be achieved by a shift routine which takes the fluctuation in the maximum possible output due to the intake air temperature correction routine into consideration.

The general structure of the apparatus will first be described with reference to FIG. 26. Because the structure of the apparatus according to this exemplary embodiment is basically similar to that of the first exemplary embodiment, only those points that differ from the first exemplary embodiment will be described.

Various data from the various sensors in a detection system C are input to the ECU 3. This data includes:
a) detection data from the rotational speed sensor Cne;
b) detection data from the accelerator pedal sensor Cac; and
c) detection data from an intake air temperature sensor C4 for detecting a temperature (intake air temperature THa) of air drawn into the diesel engine 11.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

The maximum injection calculation routine will now be described referring to FIGS. 27 and 28. This routine is control for calculating the maximum injection quantity and includes the intake air temperature correction routine that corrects the maximum injection quantity according to the intake air temperature. This process is repeatedly executed at predetermined intervals of time.

In the routine shown in FIG. 27, the engine speed Ne detected by the rotational speed sensor Cne and the intake air temperature THa detected by the intake air temperature sensor C4 are first read (step S501).

The base maximum injection quantity qilmtbase is then obtained by referencing the engine speed Ne on the maximum injection quantity calculation map (FIG. 6) (step S502). That is, the base maximum injection quantity qilmtbase is obtained as follows.
qilmtbase ← f (Ne)

Next, the maximum injection quantity correction coefficient Cf is obtained by referencing the intake air temperature THa on the correction coefficient calculation map (FIG. 23) (step S503). That is, the maximum injection quantity correction coefficient Cf is obtained as follows.
Cf ← f (THa)

Next, the maximum injection quantity qilmt is calculated by multiplying the base maximum injection quantity qilmtbase by the maximum injection quantity correction coefficient Cf. That is, the maximum injection quantity qilmt is calculated as follows (step S504).
qilmt ← qilmtbase × Cf

Thus according to the routine, the base maximum injection quantity qilmtbase obtained according to the engine speed Ne is corrected according to the intake air temperature THa, and that corrected value is then used as the maximum injection quantity qilmt.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) in the first exemplary embodiment. That is, the maximum possible output Telmt is obtained from the engine speed Ne and the maximum injection quantity qilmt.

### (Shift execution determination routine)

The shift execution determination routine is performed in a manner similar to that of the shift execution determination routine (FIG. 13) in the first exemplary embodiment. That is, a downshift is performed when the required output Tereq is equal to, or greater than, the maximum possible output Telmt.

Thus, it is possible according to the exemplary embodiment to achieve the appropriate acceleration required by the driver because the fluctuation in the maximum possible output is monitored taking into consideration the correction of the maximum injection quantity by the intake air temperature correction routine and a downshift is performed based on a comparison between the required output and the maximum possible output.

In addition to the effects (1) to (4) above from the first exemplary embodiment, the control apparatus for an automatic transmission for a diesel engine according to the fifth exemplary embodiment as described in detail above also yields the following effects.

The fifth exemplary embodiment can also be modified as follows, for example.
- In the fifth exemplary embodiment, the maximum injection quantity correction coefficient Cf is obtained with the map shown in FIG. 28. Alternatively, however, any suitable map may be used as long as the maximum injection quantity correction coefficient is set according to the intake air temperature.
- In the fifth exemplary embodiment, the maximum injection quantity correction coefficient Cf is obtained by referencing the intake air temperature THa on the map shown in FIG. 28. Alternatively, however, the maximum injection quantity correction coefficient Cf can also be obtained by applying the intake air temperature THa to a predetermined function which specifies the relationship between the intake air temperature and the maximum injection quantity correction coefficient.
- In the fifth exemplary embodiment, the maximum injection quantity calculation routine shown in FIG. 27 is executed. As long as the control calculates the maximum injection quantity according to the intake air temperature, however, the invention is not limited to the routine shown in this exemplary embodiment, i.e., the maximum injection quantity can also be calculated by another suitable routine.

### (Sixth Exemplary Embodiment)

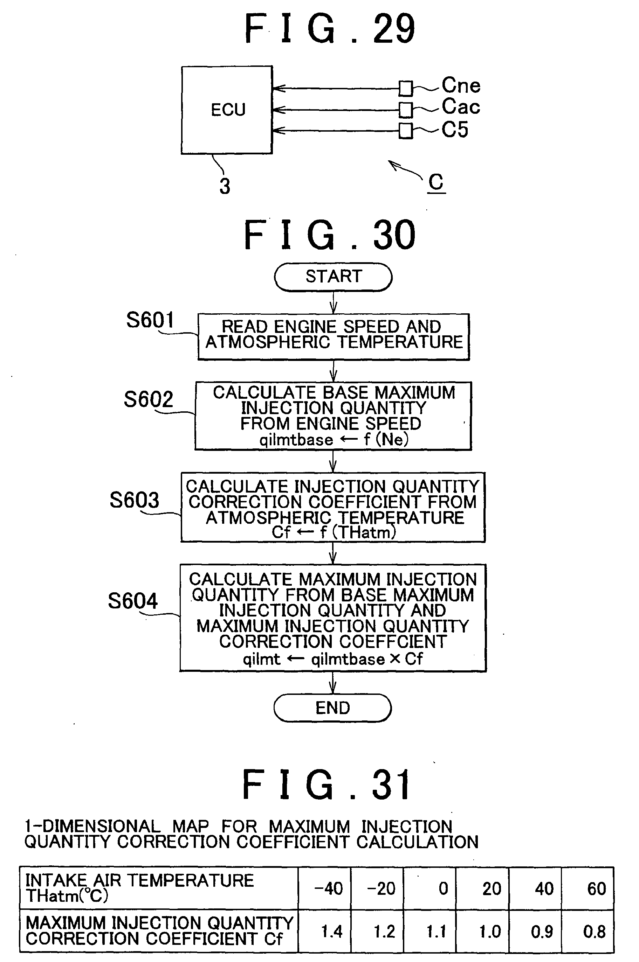

The control apparatus for an automatic transmission for a diesel engine according to a sixth exemplary embodiment of the invention will hereinafter be described with reference to FIGS. 29 to 31.

In the sixth exemplary embodiment, the invention is applied to the automatic transmission in a vehicle in which is mounted an automatic transmission and a diesel engine that sets the maximum injection quantity according to a temperature of the atmosphere (i.e., outside air) around the vehicle.

In the diesel engine, an atmospheric temperature correction routine for correcting the maximum injection quantity according to the temperature of the outside air is performed in order to keep the maximum injection quantity at an appropriate value in accordance with a change in the density of the intake air. The value of the maximum possible output differs depending on the correction of the maximum injection quantity.

Therefore, this exemplary embodiment enables an appropriate downshift to be achieved by executing a shift routine which takes the fluctuation in the maximum possible output due to the atmospheric temperature correction routine into consideration.

The general structure of the apparatus will first be described with reference to FIG. 29. Because the structure of the apparatus according to this exemplary embodiment is similar to that of the first exemplary embodiment, only those points that differ from the first exemplary embodiment will be described.

Various data from the various sensors in a detection system C are input to the ECU 3. This data includes:
a) detection data from the rotational speed sensor Cne;
b) detection data from the accelerator pedal sensor Cac; and
c) detection data from an atmospheric temperature sensor C5 for detecting a temperature of the outside air (i.e., atmospheric temperature THatm) around the vehicle 1.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

The maximum injection calculation routine will now be described referring to FIGS. 30 and 31. This routine is control for calculating the maximum injection quantity and includes the atmospheric temperature correction routine that corrects the maximum injection quantity according to the atmospheric temperature. This process is repeatedly executed at predetermined intervals of time.

In the routine shown in FIG. 30, the engine speed Ne detected by the rotational speed sensor Cne and the atmospheric temperature THatm detected by the atmospheric temperature sensor C5 are first read (step S601).

The base maximum injection quantity qilmtbase is then obtained by referencing the engine speed Ne on the maximum injection quantity calculation map (FIG. 6) (step S602). That is, the base maximum injection quantity qilmtbase is obtained as follows.
qilmtbase ← f (Ne)

Next, the maximum injection quantity correction coefficient Cf is obtained by referencing the atmospheric temperature THatm on a correction coefficient calculation map (FIG. 31) (step S603). That is, the maximum injection quantity qilmt is obtained as follows.
Cf ← f (THatm)

Next, the maximum injection quantity qilmt is calculated by multiplying the base maximum injection quantity qilmtbase by the maximum injection quantity correction coefficient Cf. That is, the maximum injection quantity qilmt is obtained as follows (step S604).
qilmt ← qilmtbase × Cf

Thus according to the routine, the base maximum injection quantity qilmtbase obtained according to the engine speed Ne is corrected according to the atmospheric temperature THatm, and that corrected value is then used as the maximum injection quantity qilmt.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) in the first exemplary embodiment. That is, the maximum possible output Telmt is obtained from the engine speed Ne and the maximum injection quantity qilmt.

### (Shift execution determination routine)

The shift execution determination routine is performed in a manner similar to that of the shift execution determination routine (FIG. 13) in the first exemplary embodiment. That is, a downshift is performed when the required output Tereq is equal to, or greater than, the maximum possible output Telmt.

Thus it is possible according to the exemplary embodiment to achieve the appropriate acceleration required by the driver because the maximum possible output is monitored taking into consideration the correction of the maximum injection quantity by the atmospheric temperature correction routine and a downshift is performed based on a comparison between the required output and the maximum possible output.

In addition to the effects (1) to (4) above from the first exemplary embodiment, the control apparatus for an automatic transmission for a diesel engine according to the sixth exemplary embodiment as described in detail above also yields the following effects.

The sixth exemplary embodiment can also be modified as follows, for example.
- In the sixth exemplary embodiment, the maximum injection quantity correction coefficient Cf is obtained with the map shown in FIG. 31. Alternatively, however, any suitable map may be used as long as the maximum injection quantity correction coefficient is set according to the atmospheric temperature.
- In the sixth exemplary embodiment, the maximum injection quantity correction coefficient Cf is obtained by referencing the atmospheric temperature THatm on the map shown in FIG. 31. Alternatively, however, the maximum injection quantity correction coefficient Cf can also be obtained by applying the atmospheric temperature THatm to a predetermined function which specifies the relationship between the atmospheric temperature and the maximum injection quantity correction coefficient.
- In the sixth exemplary embodiment, the maximum injection quantity calculation routine shown in FIG. 30 is executed. As long as the control calculates the maximum injection quantity according to the atmospheric temperature, however, the invention is not limited to the routine shown in this exemplary embodiment, i.e., the maximum injection quantity can also be calculated by another suitable routine.

### (Seventh Exemplary Embodiment)

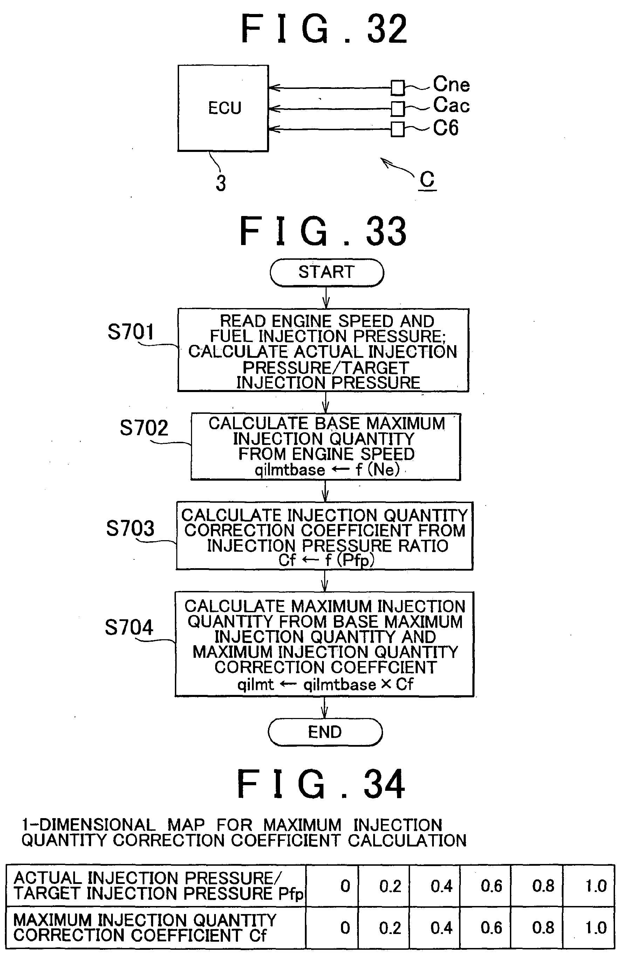

The control apparatus for an automatic transmission for a diesel engine according to a seventh exemplary embodiment of the invention will hereinafter be described with reference to FIGS. 32 to 34.

In the seventh exemplary embodiment, the invention is applied to the automatic transmission in a vehicle in which is mounted an automatic transmission and a diesel engine that sets the maximum injection quantity according to a fuel injection pressure.

In the diesel engine, a fuel injection pressure correction routine for correcting the maximum injection quantity according to the fuel injection pressure is performed in order to keep the maximum injection quantity at an appropriate value in accordance with a fluctuation in the quantity of fuel able to be injected by the injector. The value of the maximum possible output differs depending on the correction of the maximum injection quantity.

Therefore, this exemplary embodiment enables an appropriate downshift to be achieved by a shift routine which takes the fluctuation in the maximum possible output due to the fuel injection pressure correction routine into consideration.

The general structure of the apparatus will first be described with reference to FIG. 33. Because the structure of the apparatus according to this exemplary embodiment is basically similar to that of the first exemplary embodiment, only those points that differ from the first exemplary embodiment will be described.

Various data from the various sensors in the detection system C are input to the ECU 3. This data includes:
a) detection data from the rotational speed sensor Cne;
b) detection data from the accelerator pedal sensor Cac; and
c) detection data from an injection pressure sensor C6 for detecting an injection pressure of fuel (actual fuel injection pressure Pf) from the injector INJ.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

The maximum injection calculation routine will now be described referring to FIGS. 33 and 34. This routine is control for calculating the maximum injection quantity and includes the fuel injection pressure correction routine that corrects the maximum injection quantity according to the fuel injection pressure. This process is repeatedly executed at predetermined intervals of time.

In the routine shown in FIG. 33, the engine speed Ne from the rotational speed sensor Cne and the actual fuel injection pressure Pf from the injection pressure sensor C6 are first read, and a ratio (i.e., injection pressure ratio Pfp) of the actual fuel injection pressure Pf to the target value for the fuel injection pressure (i.e., target injection pressure) is then calculated (step S701).

The base maximum injection quantity qilmtbase is then obtained by referencing the engine speed Ne on the maximum injection quantity calculation map (FIG. 6) (step S702). That is, the base maximum injection quantity qilmtbase is obtained as follows.
qilmtbase ← f (Ne)

Next, the maximum injection quantity correction coefficient Cf is obtained by referencing the injection pressure ratio Pfp on a correction coefficient calculation map (FIG. 34) (step S703). That is, the maximum injection quantity qilmt is obtained as follows.
Cf ← f (Pfp)

Next, the maximum injection quantity qilmt is calculated by multiplying the base maximum injection quantity qilmtbase by the maximum injection quantity correction coefficient Cf. That is, the maximum injection quantity qilmt is calculated as follows (step S704).
qilmt ← qilmtbase × Cf

Thus according to the routine, the base maximum injection quantity qilmtbase obtained according to the engine speed Ne is corrected according to the injection pressure ratio Pfp, and that corrected value is then used as the maximum injection quantity qilmt.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) in the first exemplary embodiment. That is, the maximum possible output Telmt is obtained from the engine speed Ne and the maximum injection quantity qilmt.

### (Shift execution determination routine)

The shift execution determination routine is performed in a manner similar to that of the shift execution determination routine (FIG. 13) in the first exemplary embodiment. That is, a downshift is performed when the required output Tereq is equal to, or greater than, the maximum possible output Telmt.

Thus it is possible according to the exemplary embodiment to achieve the appropriate acceleration required by the driver because the maximum possible output is monitored taking into consideration the correction of the maximum injection quantity by the fuel injection pressure correction routine and a downshift is performed based on a comparison between the required output and the maximum possible output.

In addition to the effects (1) to (4) above from the first exemplary embodiment, the control apparatus for an automatic transmission for a diesel engine according to the seventh exemplary embodiment as described in detail above also yields the following effects.

The seventh exemplary embodiment can also be modified as follows, for example.
- In the seventh exemplary embodiment, the maximum injection quantity correction coefficient Cf is obtained with the map shown in FIG. 34. Alternatively, however, any suitable map may be used as long as the maximum injection quantity correction coefficient is set according to the injection pressure ratio.
- In the seventh exemplary embodiment, the maximum injection quantity correction coefficient Cf is obtained by referencing the injection pressure ratio Pfp on the map shown in FIG. 34. Alternatively, however, the maximum injection quantity correction coefficient Cf can also be obtained by applying the injection pressure ratio Pfp to a predetermined function which specifies the relationship between the injection pressure ratio and the maximum injection quantity correction coefficient.
- In the seventh exemplary embodiment, the maximum injection quantity calculation routine shown in FIG. 33 is executed. As long as the control calculates the maximum injection quantity corresponding to the injection pressure ratio, however, the invention is not limited to the routine shown in this exemplary embodiment, i.e., the maximum injection quantity can also be calculated by another suitable routine.

### (Eighth Exemplary Embodiment)

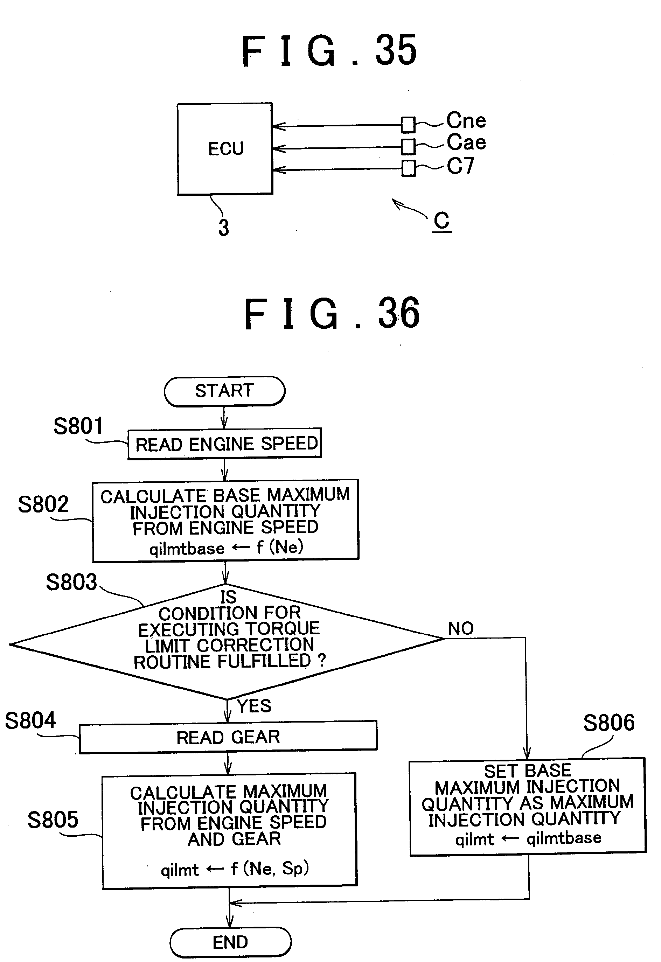

The control apparatus for an automatic transmission for a diesel engine according to an eighth exemplary embodiment of the invention will hereinafter be described with reference to FIGS. 35 to 37.

In the eighth exemplary embodiment, the invention is applied to the automatic transmission in a vehicle in which is mounted an automatic transmission and a diesel engine that sets the maximum injection quantity according to a gear in order to protect the automatic transmission.

In the diesel engine, a torque limit correction routine for correcting the maximum injection quantity according to the gear is performed in order to prevent damage to the gears due to an overspeed of the transmission. The value of the maximum possible output differs depending on the correction of the maximum injection quantity.

Therefore, this exemplary embodiment enables an appropriate downshift to be achieved by a shift routine which takes the fluctuation in the maximum possible output due to the torque limit correction routine into consideration.

The general structure of the apparatus will first be described with reference to FIG. 35. Because the structure of the apparatus according to this exemplary embodiment is basically similar to that of the first exemplary embodiment, only those points that differ from the first exemplary embodiment will be described.

Various data from the various sensors in the detection system C are input to the ECU 3. This data includes:
a) detection data from the rotational speed sensor Cne;
b) detection data from the accelerator pedal sensor Cac; and
c) detection data from a shift position sensor C7 for detecting a gear (gear Sp) of the transmission.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

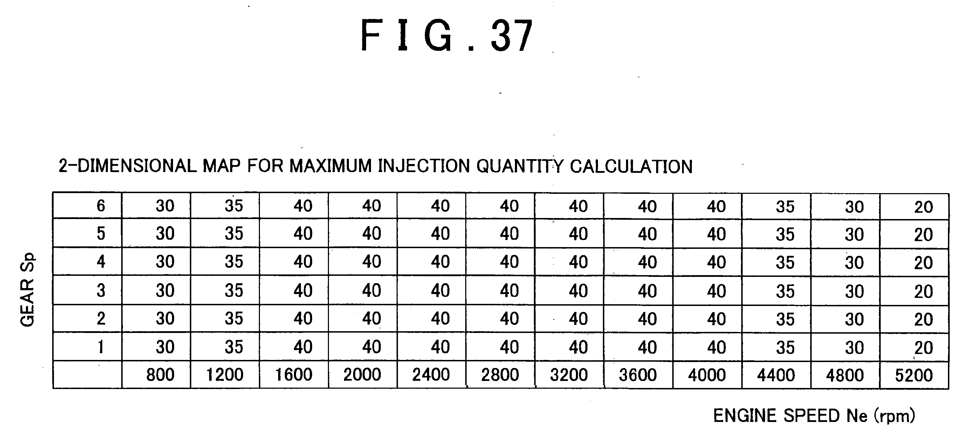

The maximum injection calculation routine will now be described referring to FIGS. 36 and 37. This routine is control for calculating the maximum injection quantity and includes the torque limit correction routine that corrects the maximum injection quantity according to the gear. This process is repeatedly executed at predetermined intervals of time.

In the routine shown in FIG. 36, the engine speed Ne detected by the rotational speed sensor Cne is first read (step S801). The base maximum injection quantity qilmtbase is then obtained by referencing the engine speed Ne on the maximum injection quantity calculation map (FIG. 6) (step S802). That is, the base maximum injection quantity qilmtbase is obtained as follows.
qilmtbase ← f (Ne)

Next, it is determined whether a condition for performing the torque limit correction routine is fulfilled (step S803). When the condition for performing the torque limit correction routine is fulfilled, the gear Sp detected by the shift position sensor C7 is read (step S804) and the maximum injection quantity qilmt is obtained by referencing the engine speed Ne and the gear Sp on a maximum injection quantity calculation map (FIG. 37) (step S805). That is, the maximum injection quantity qilmt is obtained as follows.
qilmt ← f (Ne, Sp)

On the other hand, when the condition for performing the torque limit correction is not fulfilled, the base maximum injection quantity qilmtbase is set (step S806) as the maximum injection quantity qilmt, i.e.,
qilmt ← qilmtbase.

According to this routine then, the maximum injection quantity qilmt is set according to the gear. Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) performed in the first exemplary embodiment. That is, the maximum possible output Telmt is obtained from the engine speed Ne and the maximum injection quantity qilmt.

### (Shift execution determination routine)

The shift execution determination routine is performed in a manner similar to that of the shift execution determination routine (FIG. 13) in the first exemplary embodiment. That is, a downshift is performed when the required output Tereq is equal to, or greater than, the maximum possible output Telmt.

Thus it is possible according to the exemplary embodiment to achieve the appropriate acceleration required by the driver because the fluctuation in the maximum possible output is monitored taking into consideration the correction of the maximum injection quantity by the torque limit correction routine and a downshift is performed based on a comparison between the required output and the maximum possible output.

In addition to the effects (1) to (4) above from the first exemplary embodiment, the control apparatus for an automatic transmission for a diesel engine according to the eighth exemplary embodiment as described in detail above also yields the following effects.

The eighth exemplary embodiment can also be modified as follows, for example.
- In the eighth exemplary embodiment, the maximum injection quantity qilmt is obtained with the map shown in FIG. 37. Alternatively, however, any suitable map may be used as long as the maximum injection quantity correction coefficient is set according to the gear.
- In the eighth exemplary embodiment, the maximum injection quantity qilmt is obtained by referencing the engine speed Ne and the gear Sp on the map shown in FIG. 37. Alternatively, however, the maximum injection quantity qilmt can also be obtained by applying the engine speed .Ne and the gear Sp to a predetermined function which specifies the relationship between the engine speed, the gear, and the maximum injection quantity.
- In the eighth exemplary embodiment, the maximum injection quantity calculation routine shown in FIG. 36 is executed. As long as the control calculates the maximum injection quantity according to the gear, however, the invention is not limited to the routine shown in this exemplary embodiment, i.e., the maximum injection quantity can also be calculated by another suitable routine.

### (Ninth Exemplary Embodiment)

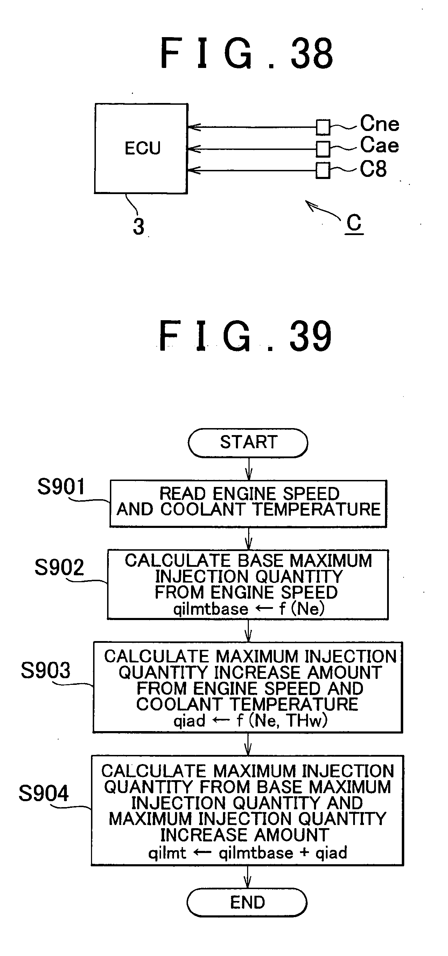

The control apparatus for an automatic transmission for a diesel engine according to a ninth exemplary embodiment of the invention will hereinafter be described with reference to FIGS. 38 to 40.

In the ninth exemplary embodiment, the invention is applied to the automatic transmission in a vehicle in which is mounted an automatic transmission and a diesel engine that sets the maximum injection quantity according to how warm the engine is.

In the diesel engine, a cold start injection quantity increase correction routine for increasing the maximum injection quantity according to how warm the engine is, is performed in order to increase engine startability. The value of the maximum possible output differs depending on the correction of the maximum injection quantity.

Therefore, this exemplary embodiment enables an appropriate downshift to be achieved by a shift routine which takes the fluctuation in the maximum possible output due to the cold start injection quantity increase correction routine into consideration.

The general structure of the apparatus will first be described with reference to FIG. 38. Because the structure of the apparatus according to this-exemplary embodiment is basically similar to that of the first exemplary embodiment, only those points that differ from the first exemplary embodiment will be described.

Various data from the various sensors in a detection system C are input to the ECU 3. This data includes:
a) detection data from the rotational speed sensor Cne;
b) detection data from the accelerator pedal sensor Cac; and
c) detection data from a coolant temperature sensor C8 for detecting a temperature of coolant (i.e., coolant temperature THw) in the diesel engine 11.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

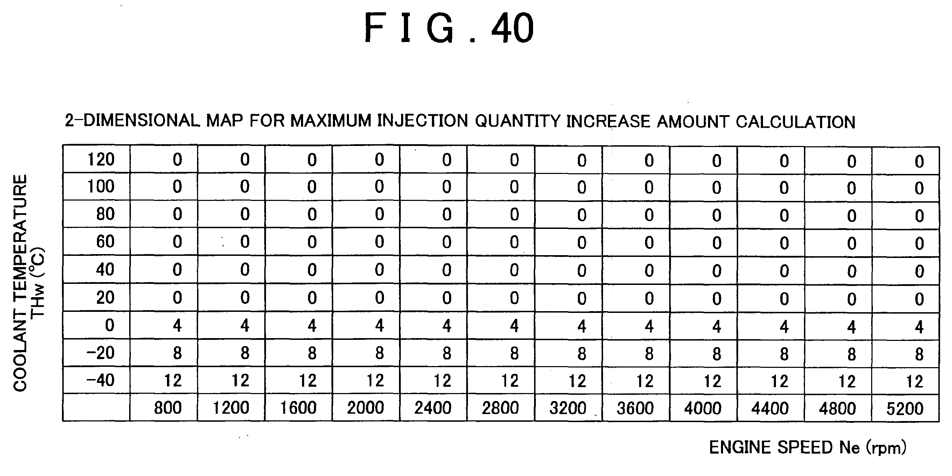

The maximum injection calculation routine will now be described referring to FIGS. 39 and 40. This routine is control for calculating the maximum injection quantity and includes the cold start injection quantity increase correction routine that increases the maximum injection quantity according to how warm the diesel engine is. This routine is repeatedly executed at predetermined intervals of time.

In the routine shown in FIG. 39, the engine speed Ne detected by the rotational speed sensor Cne and the coolant temperature THw detected by the coolant temperature sensor C8 are first read (step S901).

The base maximum injection quantity qilmtbase is then obtained by referencing the engine speed Ne on the maximum injection quantity calculation map (FIG. 6) (step S902). That is, the base maximum injection quantity qilmtbase is obtained as follows.
qilmtbase ← f (Ne)

Next, a maximum injection quantity increase amount qiad is obtained by referencing the engine speed Ne and the coolant temperature THw on a correction coefficient calculation map (FIG. 40) (step S903). That is, the maximum injection quantity increase amount qiad is obtained as follows.
qiad ← f (Ne, THw)

The maximum injection quantity qilmt is then calculated by adding the maximum injection quantity increase amount qiad to the base maximum injection quantity qilmtbase. That is, the maximum injection quantity qilmt is calculated as follows (step S904).
qilmt ← qilmtbase + qiad

Thus according to the routine, the base maximum injection quantity qilmtbase obtained according to the engine speed Ne is corrected according to the coolant temperature THw, and that corrected value is then used as the maximum injection quantity qilmt.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) in the first exemplary embodiment. That is, the maximum possible output Telmt is obtained from the engine speed Ne and the maximum injection quantity qilmt.

### (Shift execution determination routine)

The shift execution determination routine is performed in a manner similar to that of the shift execution determination routine (FIG. 13) in the first exemplary embodiment. That is, a downshift is performed when the required output Tereq is equal to, or greater than, the maximum possible output Telmt.

Thus, it is possible according to the exemplary embodiment to achieve the appropriate acceleration required by the driver because the fluctuation in the maximum possible output is monitored taking into consideration the correction of the maximum injection quantity by the cold start injection quantity increase correction routine and a downshift is performed based on a comparison between the required output and the maximum possible output.

In addition to the effects (1) to (4) above from the first exemplary embodiment, the control apparatus for an automatic transmission for a diesel engine according to the ninth exemplary embodiment as described in detail above also yields the following effects.

The ninth exemplary embodiment can also be modified as follows, for example.
- In the ninth exemplary embodiment, the maximum injection quantity increase amount qiad is obtained with the map shown in FIG. 40. Alternatively, however, any suitable map may be used as long as the maximum injection quantity correction coefficient is set according to the coolant temperature.
- In the ninth exemplary embodiment, the maximum injection quantity increase amount qiad is obtained by referencing the engine speed Ne and the coolant temperature THw on the map shown in FIG. 40. Alternatively, however, the maximum injection quantity increase amount qiad can also be obtained by applying the engine speed Ne and the coolant temperature THw to a predetermined function which specifies the relationship between the engine speed, the coolant temperature, and a maximum injection quantity increase amount.
- In the ninth exemplary embodiment, the maximum injection quantity calculation routine shown in FIG. 39 is executed. As long as the control calculates the maximum injection quantity according to the coolant temperature, however, the invention is not limited to the routine shown in this exemplary embodiment, i.e., the maximum injection quantity can also be calculated by another suitable routine.

### (Tenth Exemplary Embodiment)

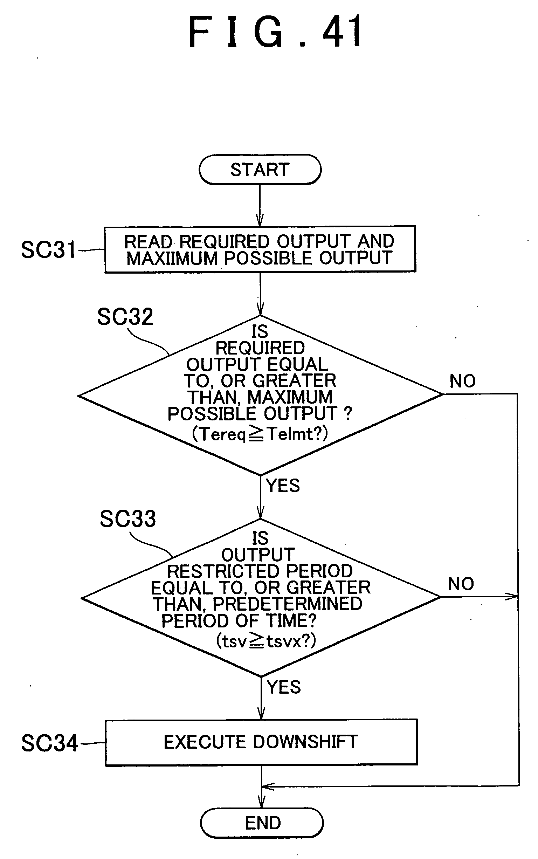

The control apparatus for an automatic transmission for a diesel engine according to a tenth exemplary embodiment of the invention will hereinafter be described with reference to FIG. 41.

In the tenth exemplary embodiment the structure is basically similar to that in the first exemplary embodiment, but the control is modified such that the downshift is performed by a modified shift execution determination routine, to be described later.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

The maximum fuel injection quantity calculation routine is executed in a manner similar to that of the maximum fuel injection quantity calculation routine (FIG. 5) in the first exemplary embodiment. That is, the base maximum injection quantity qilmtbase obtained according to the engine speed Ne is corrected according to the atmospheric pressure Patm, and that corrected value is then used as the maximum injection quantity qilmt.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) in the first exemplary embodiment. That is, the maximum possible output Telmt is obtained from the engine speed Ne and the maximum injection quantity qilmt.

### (Shift execution determination routine)

The shift execution determination routine will now be described with reference to FIG. 41. This routine corresponds to a routine executed by shift controlling means and is repeatedly executed at predetermined intervals of time.

In the routine shown in FIG. 41, the required output Tereq obtained in the required output calculation routine (FIG. 8) and the maximum possible output Telmt obtained in the maximum output calculation routine (FIG. 11) are first read (step SC31).

Next it is determined whether the required output Tereq is equal to, or greater than, the maximum possible output Telmt. That is, it is determined whether Tereq ≥ Telmt is satisfied (step SC32).

When the required output Tereq is equal to, or greater than, the maximum possible output Telmt, it is then determined whether a period of time during which the required output Tereq is equal to, or greater than, the maximum possible output Telmt, i.e., the period of time (output restricted period tsv) during which the required output Tereq is not reflected in the engine output Te, is equal to, or greater than, a predetermined period of time tsvx. That is, it is determined whether tsv ≥ tsvx is satisfied (step SC33).

When the output restricted period tsv is equal to, or greater than, the predetermined period of time tsvx, a downshift is performed to shift the transmission 12 into a lower gear (step SC34).

When the required output Tereq is less than the maximum possible output Telmt, or when the output restricted period tsv is less than the predetermined period of time tsvx, however, the transmission 12 is maintained in its current gear and the routine ends.

Thus, according to the routine, when the required output Tereq is equal to, or greater than, the maximum possible output Telmt and the output restricted period tsv is equal to, or greater than, the predetermined period of time tsvx, a downshift is performed in the transmission 12.

Also, when the required output is not being reflected in the engine output due to the required output being equal to, or greater than, the maximum possible output, it can fundamentally be said that a decrease in acceleration performance of the vehicle will result. When this period during which the required output is not being reflected in the engine output is short, however, drivability does not suffer much.

Accordingly, in the shift execution determination routine of this exemplary embodiment, by further making "tsv ≥ tsvx" a condition for a downshift, a downshift is performed when the period during which the required output is not reflected in the engine output is long. As a result, fuel efficiency is able to be improved because the same gear is used for a longer period of time.

In addition to the effects (2) to (4) above from the first exemplary embodiment, the control apparatus for an automatic transmission for a diesel engine according to the tenth exemplary embodiment as described in detail above also yields the following effects.

(5) In this exemplary embodiment, the shift in the required output Tereq and the maximum possible output Telmt is monitored and a downshift is performed in the transmission 12 when the required output Tereq becomes equal to, or greater than, the maximum possible output Telmt and the output restricted period tsv becomes equal to, or greater than, the predetermined period of time tsvx. As a result, a demand for acceleration by the driver is able to be appropriately reflected in the behavior of the vehicle because a downshift is performed when the engine output Te corresponding to the required output Tereq is no longer able to be obtained. This structure enables a gearshift suitable for the driving state of the vehicle to be achieved.

(6) Fuel efficiency is able to be appropriately improved because the same gear is used for a longer period of time. The tenth exemplary embodiment can also be modified as follows, for example.
- In the tenth exemplary embodiment, the predetermined period of time tsvx, which is set beforehand, is used as the determination value. Alternatively, however, the predetermined period of time tsvx can be made to vary according to the driving state of the vehicle and the like.

The tenth exemplary embodiment can also be applied to any one of the second through the ninth exemplary embodiments. That is, in any of the second through the ninth exemplary embodiments, the shift execution determination routine of each of those exemplary embodiments can be replaced by the shift execution determination routine of the tenth exemplary embodiment.

### (Eleventh Exemplary Embodiment)

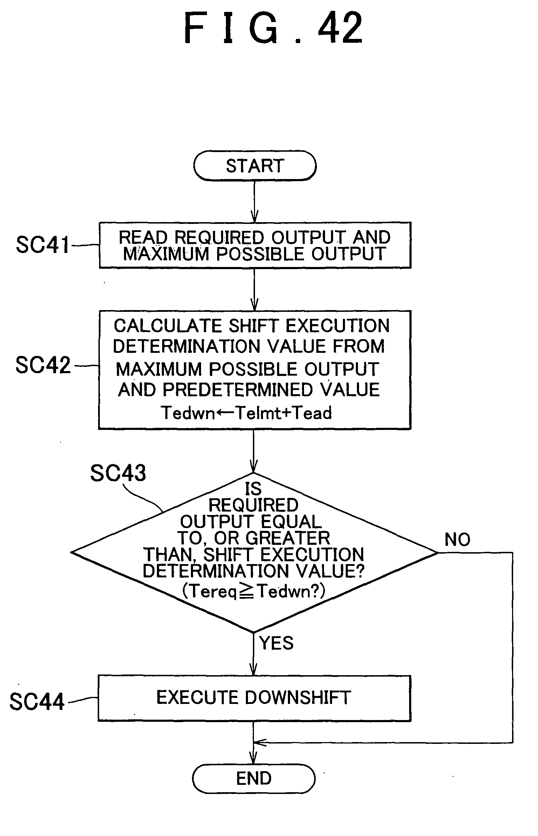

The control apparatus for an automatic transmission for a diesel engine according to an eleventh exemplary embodiment of the invention will hereinafter be described with reference to FIG. 42.

In the eleventh exemplary embodiment the structure is basically similar to that in the first exemplary embodiment, but the control is modified such that the downshift is performed by a modified shift execution determination routine, to be described later.

A fuel injection routine and a maximum injection quantity calculation routine executed in the exemplary embodiment will hereinafter be described.

### (Fuel injection routine)

The fuel injection routine is executed in a manner similar to that of the fuel injection routine (FIG. 2) in the first exemplary embodiment. That is, the fuel injection is performed by the injector INJ based on a comparison between the required injection quantity qireq determined from the accelerator pedal operation amount Accl and the maximum injection quantity qilmt determined according to the driving state of the diesel engine 11.

### (Maximum injection quantity calculation routine)

The maximum fuel injection quantity calculation routine is executed in a manner similar to that of the maximum fuel injection quantity calculation routine (FIG. 5) in the first exemplary embodiment. That is, the base maximum injection quantity qilmtbase obtained according to the engine speed Ne is corrected according to the atmospheric pressure Patm, and that corrected value is then used as the maximum injection quantity qilmt.

Next, the shift routine executed in the exemplary embodiment will be described.

### (Required output calculation routine)

The required output calculation routine is performed in a manner similar to that of the required output calculation routine (FIG. 8) performed in the first exemplary embodiment. That is, the required output Tereq is obtained directly from the accelerator pedal operation amount Accl.

### (Maximum output calculation routine)

The maximum output calculation routine is performed in a manner similar to that of the maximum output calculation routine (FIG. 11) in the first exemplary embodiment. That is, the maximum possible output Telmt is obtained from the engine speed Ne and the maximum injection quantity qilmt.

### (Shift execution determination routine)

The shift execution determination routine will now be described with reference to FIG. 42. This routine corresponds to a routine executed by shift controlling means and is repeatedly executed at predetermined intervals of time.

In the routine shown in FIG. 42, the required output Tereq obtained in the required output calculation routine (FIG. 8) and the maximum possible output Telmt obtained in the maximum output calculation routine (FIG. 11) are first read (step SC41).

Next, a shift execution determination value Tedwn is calculated by adding a predetermined value Tead to the maximum possible output Telmt. That is, the shift execution determination value Tedwn is calculated as follows (step SC42).
Tedwn ← Telmt + Tead

The predetermined value Tead in this exemplary embodiment is a predetermined positive value. Therefore, the shift execution determination value Tedwn is calculated so as to be larger than the maximum possible output Telmt.

Next it is determined whether the required output Tereq is equal to, or greater than, the shift execution determination value Tedwn. That is, it is determined whether Tereq ≥ Tedwn is satisfied (step SC43).

When the required output Tereq is equal to, or greater than, the shift execution determination value Tedwn, a downshift is performed to shift the transmission 12 into a lower gear (step SC44).

When the required output Tereq is less than the shift execution determination value Tedwn, however, the transmission 12 is maintained in its current gear and the routine ends. Thus, according to the routine, when the required output Tereq is equal to, or greater than, the shift execution determination value Tedwn, a downshift is performed in the transmission 12.

Also, when the required output is not being reflected in the engine output due to the required output being equal to, or greater than, the maximum possible output, it can fundamentally be said that a decrease in acceleration performance of the vehicle will result. When the difference between the required output and the maximum possible output is small, however, drivability does not suffer much.

Accordingly, in the shift execution determination routine of this exemplary embodiment, by making "Tereq ≥ Tedwn" a condition for a downshift, a downshift is performed when the difference between the required output and the maximum possible output is sufficiently large. As a result, fuel efficiency is able to be improved because the same gear is used for a longer period of time.

In addition to the effects (2) to (4) above from the first exemplary embodiment, the control apparatus for an automatic transmission for a diesel engine according to the eleventh exemplary embodiment as described in detail above also yields the following effects.

(5) In this exemplary embodiment, the shift in the required output Tereq and the maximum possible output Telmt is monitored and a downshift is performed in the transmission 12 when the required output Tereq becomes equal to, or greater than, the shift execution determination value Tedwn which is the sum of the predetermined value Tead and the maximum possible output Telmt. As a result, a demand for acceleration by the driver is able to be appropriately reflected in the behavior of the vehicle because a downshift is performed when the engine output Te corresponding to the required output Tereq is no longer able to be obtained. This structure enables a gearshift suitable for the driving state of the vehicle to be achieved.

(6) Fuel efficiency is able to be appropriately improved because the same gear is used for a longer period of time. The eleventh exemplary embodiment can also be modified as follows, for example.
- In the eleventh exemplary embodiment, the predetermined value Tead, which is set beforehand, is used. Alternatively, however, the predetermined value Tead can be made to vary according to the driving state of the vehicle and the like.

In the eleventh exemplary embodiment the predetermined value Tead is a positive value. Alternatively, however, the predetermined value Tead can also be a negative value.
- In the eleventh exemplary embodiment the shift execution determination value Tedwn is calculated by adding the predetermined value Tead to the maximum possible output Telmt. Alternatively, however, the shift execution determination value Tedwn can also be calculated by multiplying the maximum possible output Telmt by a predetermined value Tecf. The predetermined value Tecf can be set either to a value that is less than "1" or a value that is greater than "1". The predetermined value Tecf can also be made to vary according to the driving state of the vehicle and the like.

The eleventh exemplary embodiment can also be applied to any one of the second through the ninth exemplary embodiments. That is, in any of the second through the ninth exemplary embodiments, the shift execution determination routine of each of those exemplary embodiments can be replaced by the shift execution determination routine of the eleventh exemplary embodiment.

### (Other Exemplary Embodiments)

In addition, the following elements may be changed in each of the foregoing exemplary embodiments.
- In each of the exemplary embodiments the fuel injection is performed by the fuel injection routine shown in FIG. 2. However, as long as the control is such that the fuel injection is performed is based on a comparison between the required injection quantity and the maximum injection quantity, it is not limited to the fuel injection routine shown in each of the exemplary embodiments, i.e., any suitable routine can be employed.
- In each of the exemplary embodiments the required injection quantity qireq is obtained with the map shown in FIG. 3. However, as long as the map is such that the required injection quantity is set according to the engine speed and the accelerator pedal operation amount, any suitable map can be used.
- In each of the exemplary embodiments the required injection quantity qireq is obtained by referencing the engine speed Ne and the accelerator pedal operation amount Accl on the map shown in FIG. 3. Alternatively, however, the required injection quantity qireq can also be obtained by applying the engine speed Ne and the accelerator pedal operation amount Accl to a predetermined function which specifies the relationship between the engine speed, the accelerator pedal operation amount, and the required injection quantity.
- In each of the exemplary embodiments the base maximum injection quantity qilmtbase is obtained using the map shown in FIG. 6. However, as long as the map is such that the base maximum injection quantity is set according to the engine speed, any suitable map can be used.
- In each of the exemplary embodiments the maximum injection quantity qilmt is obtained by referencing the engine speed Ne on the map shown in FIG. 6. Alternatively, however, the base maximum injection quantity qilmtbase can also be obtained by applying the engine speed Ne to a predetermined function which specifies the relationship between the engine speed and the base maximum injection quantity.
- In each of the exemplary embodiments the required output Tereq is calculated by multiplying the accelerator pedal operation amount Accl by the output conversion coefficient Cfac. Alternatively, however, the required output Tereq can also be obtained by applying the required injection quantity qireq obtained using the engine speed Ne and the accelerator pedal operation amount by a predetermined function or referencing the required injection quantity qireq on a predetermined map.
- In each of the exemplary embodiments the output characteristics are set so that the correlative relationship between the accelerator pedal operation amount Accl and the required output Tereq is always constant. Alternatively, however, the output characteristics can be set so that the correlative relationship between the accelerator pedal operation amount Accl and the required output Tereq differs depending on the engine speed.
- In each of the exemplary embodiments the maximum possible output Telmt is obtained using the map shown in FIG. 12. However, as long as the map is such that the output is set according to the engine speed and the fuel injection quantity, any suitable map can be used.
- In each of the exemplary embodiments the maximum possible output Telmt is obtained by referencing the engine speed Ne and the required injection quantity qireq on the map shown in FIG. 12. Alternatively, however, the maximum possible output Telmt can also be obtained by applying the engine speed Ne and the required injection quantity qireq to a predetermined function which specifies the relationship between the engine speed, the required injection quantity, and the maximum possible output.
- In each of the exemplary embodiments a downshift is performed when the required output Tereq is equal to, or greater than, the maximum possible output Telmt. Alternatively, however, a downshift can be performed when two conditions, i.e., a) the accelerator pedal operation amount is increasing and b) the engine output is not increasing, are fulfilled. That is, as long as a downshift is performed when an increase in engine output corresponding to an increase in the accelerator pedal operation amount is not anticipated, any suitable condition for executing a downshift may be employed.
- In each of the exemplary embodiments a downshift is performed based on a comparison between the required output Tereq and the maximum possible output Telmt. Alternatively, however, a downshift can also be performed based on a comparison between the required injection quantity qireq and the maximum injection quantity qilmt. With this construction, the downshift can fundamentally be performed when the required injection quantity qireq is equal to, or greater than, the maximum injection quantity qilmt. Because the maximum injection quantity tends to decrease according to an increase in engine speed above a predetermined engine speed, the downshift can be executed in a more appropriate manner by making a downshift determination considering this shift in the maximum injection quantity.
- In each of the exemplary embodiments the invention is applied to an automatic transmission having an automatic clutch. The invention can also be a applied to other types of automatic transmissions, i.e., the invention can be applied to any automatic transmission as long as it shifts gears automatically. In these cases as well, the effects obtained are similar to those obtained with each of the above exemplary embodiments.
- In each of the exemplary embodiments the invention is applied to an automatic transmission for a vehicle in which is mounted a diesel engine in which the maximum injection quantity is calculated in the manner described in the above exemplary embodiments. The invention is not limited to this however. That is, the invention can also be applied to another type of automatic transmission as long as it is an automatic transmission for a vehicle in which is mounted a diesel engine in which at lease one of the following routines a) to i) is performed for correcting the maximum injection quantity shown in the above exemplary embodiments.
   a) atmospheric pressure correction routine
   b) supercharging pressure correction routine
   c) overspeed avoidance correction routine
   d) intake air quantity correction routine
   e) intake air temperature correction routine
   f) atmospheric temperature correction routine
   g) fuel injection pressure correction routine
   1) torque limit correction routine
   i) cold start injection quantity increase correction routine
- Further, the invention can also be applied to an automatic transmission for a vehicle in which is mounted a diesel engine in which a routine for correcting the maximum injection quantity other than the above correction routines a) to i) is performed. That is, the invention may be applied to another automatic transmission as long as it is an automatic transmission for a vehicle provided together with a diesel engine in which the base maximum injection quantity is corrected based on a predetermined running parameter. In this case as well, effects similar to those obtained in each of the exemplary embodiments described above can be obtained.

A control apparatus for an automatic transmission for a diesel engine is applied to a vehicle (1) in which is mounted a diesel engine (11) in which fuel is injected based on a comparison between a required value (qireq) for a fuel injection quantity determined based on an operation amount (Accl) of an accelerator pedal (AC) and a maximum injection quantity (qilmt), and the maximum injection quantity (qilmt) is corrected based on a predetermined running parameter. A downshift is then performed in a transmission (12, 13) when the required value (Tereq) for output from the diesel engine (11) calculated from the operation amount (Accl) of the accelerator pedal (AC) is equal to, or greater than, an upper limit value (Telmt) for the output from the diesel engine (11) calculated based on the maximum injection quantity (qilmt). Accordingly, a gearshift is able to be realized that is appropriated for the running state of the vehicle.

## Claims

1. A control apparatus for an automatic transmission for a diesel engine, which i) is applied to a vehicle in which is mounted a diesel engine (11) in which fuel is injected based on a comparison of a required value (qireq) for a fuel injection quantity and an upper limit value (qilmt) for the fuel injection quantity, and the upper limit value for the fuel injection quantity is corrected based on a predetermined running parameter, and ii) changes a gear of the automatic transmission (12, 13) in the vehicle, the control apparatus **characterised by** comprising:
shift controlling means for changing the gear of the automatic transmission (12, 13) based on a comparison between a required value (Tereq) for an output from the diesel engine (11) and an upper limit value (Telmt) for the output from the diesel engine (11) calculated based on the upper limit value (qilmt) for the fuel injection quantity.

2. The control apparatus according to claim 1, **characterised in that** the required value (Tereq) for the output from the diesel engine (11) is calculated based on the required value (qireq) for the fuel injection quantity.

3. The control apparatus according to claim 2, **characterised in that** the upper limit value (Telmt) of the output from the diesel engine (11) is calculated based on the upper limit value (qilmt) for the fuel injection quantity while the correction of the upper limit value (qilmt) for the fuel injection quantity is monitored.

4. The control apparatus according to claim 1, **characterised in that** the fuel injection quantity is determined based on an operation amount (Accl) of an accelerator pedal (AC), and the required value (Tereq) for the output from the diesel engine (11) is calculated from the operation amount (Accl) of the accelerator pedal (AC).

5. The control apparatus according to claim 4, **characterised in that** the upper limit value (Telmt) for the output from the diesel engine (11) is calculated based on the upper limit value (qilmt) for the fuel injection quantity while the correction of the upper limit value (qilmt) for the fuel injection quantity is monitored.

6. The control apparatus according to any one of claims 1 to 5, **characterised in that** the shift controlling means performs a downshift in the automatic transmission (12, 13) when the required value (Tereq) for the output from the diesel engine (11) is equal to, or greater than, the upper limit value (Telmt) for the output from the diesel engine (11).

7. The control apparatus according to any one of claims 2 to 6, **characterised in that** the shift controlling means comprises:
required output calculating means for calculating the required value (Tereq) for the output from the diesel engine (11) based on the required value (qireq) for the fuel injection quantity or the operation amount (Accl) of the accelerator pedal (AC);
maximum output calculating means for calculating the upper limit value (Telmt) for the output from the diesel engine (11) based on the upper limit value (qilmt) for the fuel injection quantity; and
downshift controlling means for performing a downshift in the automatic transmission (12, 13) when the required value (Tereq) for the output is equal to, or greater than, the upper limit value (Telmt) for the output.

8. The control apparatus according to any one of claims 1 to 7, **characterised in that** the running parameter includes at least one of an atmospheric pressure (Patm), a supercharging pressure (Ptb), an intake air quantity (Fa), an intake air temperature (THa), an atmospheric temperature (THatm), an actual fuel injection pressure (Pf), a gear, and a coolant temperature (THw).

9. A control method for an automatic transmission for a diesel engine, i) which is applied to a vehicle in which is mounted a diesel engine (11) in which fuel is injected based on a comparison of a required value (qireq) for a fuel injection quantity and an upper limit value (qilmt) for the fuel injection quantity, and the upper limit value (qilmt) for the fuel injection quantity is corrected based on a predetermined running parameter, ii) by which a gear of the automatic transmission (12, 13) in the vehicle is changed, the control method **characterised by** comprising the following steps of:
obtaining a required value (Tereq) for an output from the diesel engine (11);
calculating an upper limit value (Telmt) for the output from the diesel engine (11) based on the upper limit value (qilmt) for the fuel injection quantity; and
changing the gear of the automatic transmission (12, 13) based on a comparison between the required value (Tereq) for the output and the upper limit value (Telmt) of the output.

10. The control method according to claim 9, **characterised by** further comprising the following step of:
calculating the required value (Tereq) for the output from the diesel engine (11) based on the required value (qireq) for the fuel injection quantity.

11. The control method according to claim 10, **characterised by** further comprising the following step of:
calculating the upper limit value (Telmt) for the output from the diesel engine (11) based on the upper limit value (qilmt) for the fuel injection quantity while monitoring a correction of the upper limit value (qilmt) for the fuel injection quantity.

12. The control method according to claim 9, **characterised by** further comprising the following steps of:
determining the fuel injection quantity based on an operation amount (Accl) of an accelerator pedal (AC); and
calculating the required value (Tereq) for the output from the diesel engine (11) from the operation amount (Accl) of the accelerator pedal (AC).

13. The control method according to claim 12, **characterised by** further comprising the following step of:
calculating the upper limit value (Telmt) for the output from the diesel engine (11) based on the upper limit value (qilmt) for the fuel injection quantity while monitoring the correction of the upper limit value (qilmt) for the fuel injection quantity.

14. The control method according to any one of claims 10 to 13, **characterised by** further comprising the following step of:
performing a downshift in the automatic transmission (12, 13) when the required value (Tereq) for the output from the diesel engine (11) is equal to, or greater than, the upper limit value (Telmt) for the output from the diesel engine (11).

15. The control method according to any one of claims 9 to 13, **characterised in that** the running parameter includes at least one of an atmospheric pressure (Patm), a supercharging pressure (Ptb), an intake air quantity (Fa), an intake air temperature (THa), an atmospheric temperature (THatm), an actual fuel injection pressure (Pf), a gear, and a coolant temperature (THw).
